# EUROPEAN PATENT APPLICATION

(11) **EP 4 475 581 A1**
(43) Date of publication of application: **11.12.2024**
(21) Application number: 23765705.1
(22) Date of filing: 09.02.2023
(51) Int. Cl.: H04W 12/08

(54) **COMMUNICATION METHOD, TERMINAL DEVICE, AND COMMUNICATION APPARATUS**

(30) Priority: 07.03.2022 CN 202210217003
(71) Applicant: Huawei Technologies Co., Ltd., Shenzhen, Guangdong 518129 (CN)
(72) Inventor: WANG, Donghui, Shenzhen, Guangdong 518129 (CN); LIU, Fei, Shenzhen, Guangdong 518129 (CN)
(74) Representative: Isarpatent
(86) International application number: PCT/CN2023/075097
(87) International publication number: WO 2023/169127

(57) **Abstract**

Embodiments of this application provide a communication method and apparatus. The method is applied to a communication system including at least one blockchain. The method includes: A terminal device generates a first request, where the first request includes information about a first blockchain, and is used to request to access the first blockchain. The terminal device sends the first request to a first network element. The first request is used to request to access the first blockchain, so that the terminal device accesses the blockchain in a scenario in which the communication system including the terminal device and the first network element is integrated with the blockchain, and an operator can create a secure and tamper-proof data sharing platform for the terminal device by using the blockchain.

## Description

This application claims priority to Chinese Patent Application No. 202210217003.5, filed with the China National Intellectual Property Administration on March 7, 2022 and entitled "COMMUNICATION METHOD, TERMINAL DEVICE, AND COMMUNICATION APPARATUS", which is incorporated herein by reference in its entirety.

### TECHNICAL FIELD

Embodiments of this application relate to the communication field, and more specifically, to a communication method, a terminal device, and a communication apparatus.

### BACKGROUND

A blockchain technology is a distributed ledger that integrates a plurality of technologies such as a cryptography technology, a peer-to-peer (peer-to-peer, P2P) network, and a distributed database. As an open and transparent decentralization technology, the blockchain technology transforms a center of authority and central trust in a conventional technology into a group consensus and decentralized trust, builds a distributed ledger that is guaranteed by the cryptography technology and that cannot be tampered with, and further provides smart contracts to automatically execute digital transactions.

The blockchain technology essentially changes the trust logic of human society. Applying a blockchain to a 6th generation (6th generation, 6G) mobile communication system can enhance security and trustworthiness of 6G. Depending on features of the blockchain technology, the blockchain can be used as a unified trusted platform to implement historical event tracing and automatic network management. For example, in a scenario in which the blockchain is integrated with the 6G system, when a terminal device can access the blockchain, the blockchain may provide the terminal device with information related to the terminal device (for example, a trip during an epidemic).

It can be learned from the foregoing descriptions that integration of the blockchain and the 6G system can enhance communication. In a scenario in which a blockchain technology is integrated with a communication system (for example, a 6G system), how a terminal device accesses a blockchain becomes an urgent problem to be resolved.

### SUMMARY

Embodiments of this application provide a communication method, to support a terminal device in a communication system to access a blockchain, thereby helping an operator establish a secure and tamper-proof data sharing platform for the terminal device by using the blockchain.

According to a first aspect, a communication method is provided. The method may be performed by a terminal device, or may be performed by a component (for example, a chip or a circuit) of the terminal device. This is not limited herein. For ease of description, the following uses an example in which the method is performed by the terminal device for description.

The method is applied to a communication system including at least one blockchain. The method includes: The terminal device generates a first request, where the first request is used to request to access a first blockchain, and the first request includes information about the first blockchain; and the terminal device sends the first request to a first network element.

Based on the foregoing technical solution, in a system in which the blockchain is integrated with the communication system, when the terminal device needs to access the first blockchain, the terminal device may send the first request to the first network element to request to access the first blockchain, so that the terminal device accesses the blockchain in a scenario in which the communication system including the terminal device and the first network element is integrated with the blockchain, thereby helping an operator establish a secure and tamper-proof data sharing platform for the terminal device by using the blockchain.

With reference to the first aspect, in some implementations of the first aspect, the first request further includes at least one of the following information: an identifier of a transaction, an identifier of a block, or an identifier of an account.

Further, the first request may further include more information, so as to more accurately determine an object that needs to be accessed. For example, the first request carries an identifier of a transaction, so that the first network element determines that the terminal device needs to access the transaction.

With reference to the first aspect, in some implementations of the first aspect, subscription data of the terminal device includes at least one of the following information: information indicating a transaction set that the terminal device has permission to access, information indicating a block set that the terminal device has permission to access, or information indicating an account set that the terminal device has permission to access; or the method further includes: The terminal device receives a first message, where the first message includes at least one of the following information: information indicating a transaction set accessed by the terminal device, information indicating a block set accessed by the terminal device, or information indicating an account set accessed by the terminal device.

Based on the foregoing technical solution, after the terminal device subscribes to the operator, information about a transaction and a block that can be accessed may be stored by the operator as subscription data, or information about a transaction and a block that can be accessed by the terminal device is learned from another device, thereby improving accuracy of subsequently determining, by the first network element, whether the terminal device has permission to access some transactions and blocks.

With reference to the first aspect, in some implementations of the first aspect, the subscription data of the terminal device includes information indicating a blockchain set that the terminal device has permission to access; or the method further includes: The terminal device receives the first message, where the first message includes information indicating a blockchain set accessed by the terminal, where the first blockchain belongs to the blockchain set.

Based on the foregoing technical solution, after the terminal device subscribes to the operator, information about a blockchain that can be accessed may be stored by the operator as subscription data, or information about a blockchain that can be accessed by the terminal device is learned from another device, thereby improving accuracy of subsequently determining, by the first network element, whether the terminal device has permission to access some blockchains.

With reference to the first aspect, in some implementations of the first aspect, the method further includes: The terminal device receives a first authentication message from the first network element or the first blockchain, where the first authentication message is used to authenticate the terminal device; the terminal device sends a second authentication message in response to the first authentication message to the first network element or the first blockchain; and the terminal device receives authentication indication information from the first network element or the first blockchain, where the authentication indication information indicates whether the terminal device is successfully authenticated.

Based on the foregoing technical solution, in a process in which the terminal device requests to access the first blockchain, the terminal device may be authenticated, so as to improve security of an access process.

With reference to the first aspect, in some implementations of the first aspect, when the authentication indication information indicates that the first communication apparatus is successfully authenticated, the method further includes: The terminal device sends a data access request to the first blockchain, where the data access request is used to request to obtain first data on the first blockchain; and the terminal device receives the first data from the first blockchain; or the terminal device sends a data access request to the first blockchain, where the data access request is used to request to send second data to the first blockchain, and the data access request includes the second data.

Based on the foregoing technical solution, when the terminal device is successfully authenticated (for example, the terminal device can access the first blockchain), the terminal device may perform at least one of the following operations with the first blockchain: a read (for example, data on-chain) operation, a write (for example, data obtaining) operation, or an operation of invoking a smart contract, so that the first blockchain provides data for the terminal device and the terminal device reports data.

With reference to the first aspect, in some implementations of the first aspect, the method further includes: The terminal device receives a first notification message from the first network element, where the first notification message indicates to revoke permission for the terminal device to access the first blockchain.

For example, the notification message may indicate that the terminal device no longer has the permission to access the first blockchain, so as to prevent the terminal device from continuing to access the first blockchain when the terminal device cannot access the first blockchain.

With reference to the first aspect, in some implementations of the first aspect, the method further includes: The terminal device receives a first configuration message from the first network element, where the first configuration message includes at least one of the following information: an identifier corresponding to a first configuration, an identifier of a blockchain corresponding to the first configuration, an identifier of the terminal device, an address of the blockchain corresponding to the first configuration, a format of third data, or a type of the third data; and the first configuration includes: configuring the terminal device to send the third data to the blockchain, or configuring the terminal device to receive the third data sent by the blockchain.

Based on the foregoing technical solution, the terminal device may be configured by using the first configuration message, so that data is communicated between the terminal device and the first blockchain.

With reference to the first aspect, in some implementations of the first aspect, the method further includes: The terminal device receives first indication information from the first network element; or the terminal device sends the first indication information to the first network element, where the first indication information indicates any one of the following: indicating to update the first configuration, indicating to cancel the first configuration, indicating to suspend the first configuration, or indicating to resume the first configuration.

For example, an operation such as update or suspension may be performed on the first configuration by using the first indication information, to improve configuration flexibility.

With reference to the first aspect, in some implementations of the first aspect, before the receiving authentication indication information, the method further includes: The terminal device generates a first transaction based on the first configuration and the third data; and the terminal device sends the first transaction, where the authentication indication information indicates whether the terminal device is successfully authenticated; or the terminal device receives the third data from the first blockchain.

Based on the foregoing technical solution, after receiving the first configuration message, the terminal device may perform data transmission with the first blockchain based on the first configuration, without waiting for an authentication result, so as to improve time validity of data transmission.

According to a second aspect, a communication method is provided. The method may be performed by a first network element, or may be performed by a component (for example, a chip or a circuit) of the first network element. This is not limited herein. For ease of description, the following uses an example in which the method is performed by the first network element for description.

The method is applied to a communication system including at least one blockchain. The method includes: A first network element receives a first request from a terminal device, where the first request is used to request to access a first blockchain, and the first request includes information about the first blockchain; and the first network element determines, based on the first request, that the terminal device requests to access the first blockchain.

Based on the foregoing technical solution, in a system in which the blockchain is integrated with the communication system, when the terminal device needs to access the first blockchain, the terminal device may send the first request to the first network element to request to access the first blockchain, so that the terminal device accesses the blockchain in a scenario in which the communication system including the terminal device and the first network element is integrated with the blockchain, thereby helping an operator establish a secure and tamper-proof data sharing platform for the terminal device by using the blockchain.

With reference to the second aspect, in some implementations of the second aspect, the method further includes: The first network element sends a query message to a unified data management network element, where the query message is used to query subscription data of the terminal device and/or policy information; and the first network element receives the subscription data of the terminal device and/or the policy information from the unified data management network element, where the subscription data of the terminal device and/or the policy information include/includes information indicating a blockchain set that the terminal device has permission to access.

Based on the foregoing technical solution, the first network element may obtain the subscription data of the terminal device or the network policy information from the unified data management network element, and can determine, based on the obtained information, whether the terminal device has permission to access the first blockchain.

With reference to the second aspect, in some implementations of the second aspect, the first request further includes at least one of the following information: an identifier of a transaction, an identifier of a block, or an identifier of an account.

With reference to the second aspect, in some implementations of the second aspect, the subscription data of the terminal device includes at least one of the following information: information indicating a transaction set that the terminal device has permission to access, information indicating a block set that the terminal device has permission to access, or information indicating an account set that the terminal device has permission to access.

With reference to the second aspect, in some implementations of the second aspect, the subscription data of the terminal device includes information indicating a blockchain set that the terminal device has permission to access.

With reference to the second aspect, in some implementations of the second aspect, the method further includes: The first network element sends a first authentication message to the terminal device, where the first authentication message is used to authenticate the terminal device; the first network element receives a second authentication message in response to the first authentication message from the terminal device; and the first network element sends authentication indication information to the terminal device, where the authentication indication information indicates whether the terminal device is successfully authenticated.

Based on the foregoing technical solution, in a process in which the terminal device requests to access the first blockchain, the terminal device may be authenticated, so as to improve security of an access process.

With reference to the second aspect, in some implementations of the second aspect, the method further includes: The first network element sends a first notification message to the terminal device, where the first notification message indicates to revoke permission for the terminal device to access the first blockchain.

For example, the first notification message may indicate that the terminal device no longer has the permission to access the first blockchain, so as to prevent the terminal device from continuing to access the first blockchain when the terminal device cannot access the first blockchain.

With reference to the second aspect, in some implementations of the second aspect, the method further includes: The first network element receives the first notification message from the first blockchain, where the first notification message indicates to revoke the permission for the terminal device to access the first blockchain; and the first network element determines that the first blockchain has permission to revoke access of the terminal device to the first blockchain.

With reference to the second aspect, in some implementations of the second aspect, the method further includes: The first network element sends a first configuration message to the terminal device, where the first configuration message includes at least one of the following information: an identifier corresponding to a first configuration, an identifier of a blockchain corresponding to the first configuration, an identifier of the terminal device, an address of the blockchain corresponding to the first configuration, a format of third data, or a type of the third data; and the first configuration includes: configuring the terminal device to send the third data to the blockchain, or configuring the terminal device to receive the third data sent by the blockchain.

Based on the foregoing technical solution, the terminal device may be configured by using the first configuration message, so that data is communicated between the terminal device and the first blockchain.

With reference to the second aspect, in some implementations of the second aspect, the method further includes: The first network element sends first indication information to the terminal device; or the first network element receives the first indication information from the terminal device, where the first indication information indicates any one of the following: indicating to update the first configuration, indicating to suspend the first configuration, indicating to cancel the first configuration, or indicating to resume the first configuration.

For example, an operation such as update or suspension may be performed on the first configuration by using the first indication information, to improve configuration flexibility.

With reference to the second aspect, in some implementations of the second aspect, the method further includes: The first network element sends a second configuration message to an access network device, where the second configuration message includes at least one of the following information: an identifier corresponding to a second configuration, an identifier of a blockchain corresponding to the second configuration, an identifier of the access network device, an address of the blockchain corresponding to the second configuration, a format of fourth data, or a type of the fourth data, where the second configuration includes: configuring the access network device to send the fourth data to the blockchain, or configuring the access network device to receive the fourth data sent by the blockchain.

Based on the foregoing technical solution, the access network device may be configured by using the second configuration message, so that data is communicated between the access network device and the first blockchain.

With reference to the second aspect, in some implementations of the second aspect, the method further includes: The first network element sends second indication information to the access network device; or the first network element receives the second indication information from the access network device, where the second indication information indicates any one of the following: indicating to update the second configuration, indicating to suspend the second configuration, indicating to cancel the second configuration, or indicating to resume the second configuration.

For example, an operation such as update or suspension may be performed on the second configuration by using the second indication information, to improve configuration flexibility.

With reference to the second aspect, in some implementations of the second aspect, a message between the first network element and the terminal device is forwarded by a second network element, or the first network element and the second network element are a same network element; and the second network element includes a mobility management function network element AMF or a security anchor function network element SEAF.

According to a third aspect, a communication method is provided. The method may be performed by an access network device, or may be performed by a component (for example, a chip or a circuit) of the access network device. This is not limited herein. For ease of description, the following uses an example in which the method is performed by the access network device for description.

The method is applied to a communication system including at least one blockchain. The method includes: The access network device receives a second configuration message from a first network element, where the second configuration message includes at least one of the following information: an identifier corresponding to a second configuration, an identifier of a blockchain corresponding to the second configuration, an identifier of the access network device, an address of the blockchain corresponding to the second configuration, a format of fourth data, or a type of the fourth data; and the first configuration includes: configuring the access network device to send the fourth data to the blockchain, or configuring the access network device to receive the fourth data sent by the blockchain.

Based on the foregoing technical solution, the access network device may be configured by using the second configuration message, so that data is communicated between the access network device and the first blockchain.

With reference to the third aspect, in some implementations of the third aspect, the method further includes: The access network device receives second indication information from the first network element; or the access network device sends the first indication information to the first network element, where the second indication information indicates any one of the following: indicating to update the second configuration, indicating to suspend the second configuration, indicating to cancel the second configuration, or indicating to resume the second configuration.

For example, an operation such as update or suspension may be performed on the second configuration by using the second indication information, to improve configuration flexibility.

With reference to the third aspect, in some implementations of the third aspect, the method further includes: The access network device generates a second transaction based on the second configuration and the fourth data; and the terminal device sends the second transaction; or the access network device receives the fourth data from a first blockchain.

According to a fourth aspect, a communication method is provided. The method may be performed by a first blockchain, or may be performed by a component (for example, a chip or a circuit) of the first blockchain. This is not limited herein. For ease of description, the following uses an example in which the method is performed by the first blockchain for description.

The method is applied to a communication system including at least one blockchain. The method includes: The first blockchain sends a first authentication message to a terminal device, where the first authentication message is used to authenticate the terminal device; the first blockchain receives a second authentication message in response to the first authentication message from the terminal device; and the first blockchain sends authentication indication information to the terminal device, where the authentication indication information indicates whether the terminal device is successfully authenticated.

Based on the foregoing technical solution, in a process in which the terminal device requests to access the first blockchain, the terminal device may be authenticated, so as to improve security of an access process.

With reference to the fourth aspect, in some implementations of the fourth aspect, the method further includes: The first blockchain receives a data access request from a first network element, where the data access request is used to request to obtain first data on the first blockchain; and the first blockchain determines whether the terminal device has permission to obtain the first data on the first blockchain; or the first blockchain receives a data access request from a first network element, where the data access request is used to request to send second data to the first blockchain, and the data access request includes the second data.

With reference to the fourth aspect, in some implementations of the fourth aspect, when the terminal device has the permission to obtain the data on the first blockchain, the method further includes: The first blockchain sends the first data to the first network element.

According to a fifth aspect, a communication method is provided. The method may be performed by a terminal device, or may be performed by a component (for example, a chip or a circuit) of the terminal device. This is not limited herein. For ease of description, the following uses an example in which the method is performed by the terminal device for description.

The method is applied to a communication system including at least one blockchain. The method includes: The terminal device receives a first configuration message from a first network element, where the first configuration message includes at least one of the following information: an identifier corresponding to a first configuration, an identifier of a blockchain corresponding to the first configuration, an identifier of the terminal device, an address of the blockchain corresponding to the first configuration, a format of third data, or a type of the third data; and the terminal device determines the first configuration based on the first configuration message, where the first configuration includes: configuring the terminal device to send the third data to the blockchain, or configuring the terminal device to receive the third data sent by the blockchain.

Based on the foregoing technical solution, the terminal device may be configured by using the first configuration message, so that data is communicated between the terminal device and the first blockchain.

With reference to the fifth aspect, in some implementations of the fifth aspect, the method further includes: The terminal device receives first indication information from the first network element; or the terminal device sends the first indication information to the first network element, where the first indication information indicates any one of the following: indicating to update the first configuration, indicating to cancel the first configuration, indicating to suspend the first configuration, or indicating to resume the first configuration.

For example, an operation such as update or suspension may be performed on the first configuration by using the first indication information, to improve configuration flexibility.

With reference to the fifth aspect, in some implementations of the fifth aspect, the method further includes: The terminal device generates a first transaction based on the first configuration and the third data; and the terminal device sends the first transaction; or the terminal device receives the third data from a first blockchain.

With reference to the fifth aspect, in some implementations of the fifth aspect, the method further includes: The terminal device sends a first request to the first network element, where the first request is used to request to access a first blockchain, and the first request includes information about the first blockchain.

Based on the foregoing technical solution, in a system in which the blockchain is integrated with the communication system, when the terminal device needs to access the first blockchain, the terminal device may send the first request to the first network element to request to access the first blockchain, so that the terminal device accesses the blockchain in a scenario in which the communication system including the terminal device and the first network element is integrated with the blockchain, thereby helping an operator establish a secure and tamper-proof data sharing platform for the terminal device by using the blockchain.

With reference to the fifth aspect, in some implementations of the fifth aspect, the first request further includes at least one of the following information: an identifier of a transaction, an identifier of a block, or an identifier of an account.

Further, the first request may further include more information, so as to more accurately determine an object that needs to be accessed. For example, the first request carries an identifier of a transaction, so that the first network element determines that the terminal device needs to access the transaction.

With reference to the fifth aspect, in some implementations of the fifth aspect, subscription data of the terminal device includes at least one of the following information: information indicating a transaction set that the terminal device has permission to access, information indicating a block set that the terminal device has permission to access, or information indicating an account set that the terminal device has permission to access; or the method further includes: The terminal device receives a first message, where the first message includes at least one of the following information: information indicating a transaction set accessed by the terminal device, information indicating a block set accessed by the terminal device, or information indicating an account set accessed by the terminal device.

Based on the foregoing technical solution, after the terminal device subscribes to the operator, information about a transaction and a block that can be accessed may be stored by the operator as subscription data, or information about a transaction and a block that can be accessed by the terminal device is learned from another device, thereby improving accuracy of subsequently determining, by the first network element, whether the terminal device has permission to access some transactions and blocks.

With reference to the fifth aspect, in some implementations of the fifth aspect, the subscription data of the terminal device includes information indicating a blockchain set that the terminal device has permission to access; or the method further includes: The terminal device receives the first message, where the first message includes information indicating a blockchain set accessed by the terminal, where the first blockchain belongs to the blockchain set.

Based on the foregoing technical solution, after the terminal device subscribes to the operator, information about a blockchain that can be accessed may be stored by the operator as subscription data, or information about a blockchain that can be accessed by the terminal device is learned from another device, thereby improving accuracy of subsequently determining, by the first network element, whether the terminal device has permission to access some blockchains.

With reference to the fifth aspect, in some implementations of the fifth aspect, the method further includes: The terminal device receives a first authentication message from the first network element or the first blockchain, where the first authentication message is used to authenticate the terminal device; the terminal device sends a second authentication message in response to the first authentication message to the first network element or the first blockchain; and the terminal device receives authentication indication information from the first network element or the first blockchain, where the authentication indication information indicates whether the terminal device is successfully authenticated.

Based on the foregoing technical solution, in a process in which the terminal device requests to access the first blockchain, the terminal device may be authenticated, so as to improve security of an access process.

With reference to the fifth aspect, in some implementations of the fifth aspect, when the authentication indication information indicates that the first communication apparatus is successfully authenticated, the method further includes: The terminal device sends a data access request to the first blockchain, where the data access request is used to request to obtain first data on the first blockchain; and the terminal device receives the first data from the first blockchain; or the terminal device sends a data access request to the first blockchain, where the data access request is used to request to send second data to the first blockchain, and the data access request includes the second data.

Based on the foregoing technical solution, when the terminal device is successfully authenticated (for example, the terminal device can access the first blockchain), the terminal device may perform at least one of the following operations with the first blockchain: a read (for example, data on-chain) operation, a write (for example, data obtaining) operation, or an operation of invoking a smart contract, so that the first blockchain provides data for the terminal device and the terminal device reports data.

With reference to the fifth aspect, in some implementations of the fifth aspect, the method further includes: The terminal device receives a first notification message from the first network element, where the first notification message indicates to revoke permission for the terminal device to access the first blockchain.

For example, the notification message may indicate that the terminal device no longer has the permission to access the first blockchain, so as to prevent the terminal device from continuing to access the first blockchain when the terminal device cannot access the first blockchain.

According to a sixth aspect, a communication method is provided. The method may be performed by a first network element, or may be performed by a component (for example, a chip or a circuit) of the first network element. This is not limited herein. For ease of description, the following uses an example in which the method is performed by the first network element for description.

The method is applied to a communication system including at least one blockchain. The method includes: The first network element generates a first configuration message and/or a second configuration message, where the first configuration message includes at least one of the following information: an identifier corresponding to a first configuration, an identifier of a blockchain corresponding to the first configuration, an identifier of a terminal device, an address of the blockchain corresponding to the first configuration, a format of third data, or a type of the third data; the first configuration includes: configuring the terminal device to send the third data to the blockchain, or configuring the terminal device to receive the third data sent by the blockchain; the second configuration message includes at least one of the following information: an identifier corresponding to a second configuration, an identifier of a blockchain corresponding to the second configuration, an identifier of an access network device, an address of the blockchain corresponding to the second configuration, a format of fourth data, or a type of the fourth data; and the second configuration includes: configuring the access network device to send the fourth data to the blockchain, or configuring the access network device to receive the fourth data sent by the blockchain; the first network element sends the first configuration message to the terminal device; and the first network element sends the second configuration message to the access network device.

Based on the foregoing technical solution, the terminal device may be configured by using the first configuration message, so that data is communicated between the terminal device and the first blockchain, and/or the access network device may be configured by using the second configuration message, so that data is communicated between the access network device and the first blockchain.

With reference to the sixth aspect, in some implementations of the sixth aspect, the method further includes: The first network element sends first indication information to the terminal device; or the first network element receives the first indication information from the terminal device, where the first indication information indicates any one of the following: indicating to update the first configuration, indicating to suspend the first configuration, indicating to cancel the first configuration, or indicating to resume the first configuration.

For example, an operation such as update or suspension may be performed on the first configuration by using the first indication information, to improve configuration flexibility.

With reference to the sixth aspect, in some implementations of the sixth aspect, the method further includes: The first network element sends second indication information to the access network device; or the first network element receives the second indication information from the access network device, where the second indication information indicates any one of the following: indicating to update the second configuration, indicating to suspend the second configuration, indicating to cancel the second configuration, or indicating to resume the second configuration.

For example, an operation such as update or suspension may be performed on the second configuration by using the second indication information, to improve configuration flexibility.

With reference to the sixth aspect, in some implementations of the sixth aspect, the method further includes: The first network element receives a first request from the terminal device, where the first request is used to request to access a first blockchain, and the first request includes information about the first blockchain.

Based on the foregoing technical solution, in a system in which the blockchain is integrated with the communication system, when the terminal device needs to access the first blockchain, the terminal device may send the first request to the first network element to request to access the first blockchain, so that the terminal device accesses the blockchain in a scenario in which the communication system including the terminal device and the first network element is integrated with the blockchain, thereby helping an operator establish a secure and tamper-proof data sharing platform for the terminal device by using the blockchain.

With reference to the sixth aspect, in some implementations of the sixth aspect, the method further includes: The first network element sends a query message to a unified data management network element, where the query message is used to query subscription data of the terminal device and/or policy information; and the first network element receives the subscription data of the terminal device and/or the policy information from the unified data management network element, where the subscription data of the terminal device and/or the policy information include/includes information indicating a blockchain set that the terminal device has permission to access.

Based on the foregoing technical solution, the first network element may obtain the subscription data of the terminal device or the network policy information from the unified data management network element, and can determine, based on the obtained information, whether the terminal device has permission to access the first blockchain.

With reference to the sixth aspect, in some implementations of the sixth aspect, the first request further includes at least one of the following information: an identifier of a transaction, an identifier of a block, or an identifier of an account.

With reference to the sixth aspect, in some implementations of the sixth aspect, the subscription data of the terminal device includes at least one of the following information: information indicating a transaction set that the terminal device has permission to access, information indicating a block set that the terminal device has permission to access, or information indicating an account set that the terminal device has permission to access.

With reference to the sixth aspect, in some implementations of the sixth aspect, the subscription data of the terminal device includes information indicating a blockchain set that the terminal device has permission to access.

With reference to the sixth aspect, in some implementations of the sixth aspect, the method further includes: The first network element sends a first authentication message to the terminal device, where the first authentication message is used to authenticate the terminal device; the first network element receives a second authentication message in response to the first authentication message from the terminal device; and the first network element sends authentication indication information to the terminal device, where the authentication indication information indicates whether the terminal device is successfully authenticated.

Based on the foregoing technical solution, in a process in which the terminal device requests to access the first blockchain, the terminal device may be authenticated, so as to improve security of an access process.

With reference to the sixth aspect, in some implementations of the sixth aspect, the method further includes: The first network element sends a first notification message to the terminal device, where the first notification message indicates to revoke permission for the terminal device to access the first blockchain.

For example, the first notification message may indicate that the terminal device no longer has the permission to access the first blockchain, so as to prevent the terminal device from continuing to access the first blockchain when the terminal device cannot access the first blockchain.

With reference to the sixth aspect, in some implementations of the sixth aspect, the method further includes: The first network element receives the first notification message from the first blockchain, where the first notification message indicates to revoke the permission for the terminal device to access the first blockchain; and the first network element determines that the first blockchain has permission to revoke access of the terminal device to the first blockchain.

According to a seventh aspect, a communication method is provided. The method may be performed by a first network element, or may be performed by a component (for example, a chip or a circuit) of the first network element. This is not limited herein. For ease of description, the following uses an example in which the method is performed by the first network element for description.

The method is applied to a communication system including at least one blockchain. The method includes: The first network element determines, based on a service requirement of a first blockchain, to indicate a terminal device to access the first blockchain; the first network element sends a first authentication message to the terminal device, where the first authentication message is used to authenticate the terminal device; the first network element receives a second authentication message in response to the first authentication message from the terminal device; and the first network element sends authentication indication information to the terminal device, where the authentication indication information indicates whether the terminal device is successfully authenticated.

Based on the foregoing technical solution, in a process in which the first network element determines that the terminal device needs to access the first blockchain, the terminal device may be authenticated, so as to improve security of an access process.

With reference to the seventh aspect, in some implementations of the seventh aspect, the method further includes: The first network element sends a query message to a unified data management network element, where the query message is used to query subscription data of the terminal device and/or policy information; and the first network element receives the subscription data of the terminal device and/or the policy information from the unified data management network element, where the subscription data of the terminal device and/or the policy information include/includes information indicating a blockchain set that the terminal device has permission to access.

With reference to the seventh aspect, in some implementations of the seventh aspect, the method further includes: The first network element sends a first notification message to the terminal device, where the first notification message indicates to revoke permission for the terminal device to access the first blockchain.

For example, the notification message may indicate that the terminal device no longer has the permission to access the first blockchain, so as to prevent the terminal device from continuing to access the first blockchain when the terminal device cannot access the first blockchain.

With reference to the seventh aspect, in some implementations of the seventh aspect, the method further includes: The first network element receives the first notification message from the first blockchain, where the first notification message indicates to revoke the permission for the terminal device to access the first blockchain; and the first network element determines that the first blockchain has permission to revoke access of the terminal device to the first blockchain.

With reference to the seventh aspect, in some implementations of the seventh aspect, a message between the first network element and the terminal device is forwarded by a second network element, or the first network element and the second network element are a same network element; and the second network element includes a mobility management function network element AMF or a security anchor function network element SEAF.

According to an eighth aspect, a terminal device is provided. The terminal device is configured to perform the method provided in the first aspect or the fifth aspect. Specifically, the communication apparatus may include units and/or modules configured to perform the method provided in any one of the foregoing implementations of the first aspect or the fifth aspect, for example, a processing unit and an obtaining unit.

In an implementation, the transceiver unit may be a transceiver or an input/output interface, and the processing unit may be at least one processor. Optionally, the transceiver may be a transceiver circuit. Optionally, the input/output interface may be an input/output circuit.

In another implementation, the transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

According to a ninth aspect, a communication apparatus is provided. The apparatus is configured to perform the method provided in the second aspect or the sixth aspect. Specifically, the communication apparatus may include units and/or modules configured to perform the method provided in the second aspect or the sixth aspect, for example, a processing unit and an obtaining unit.

In an implementation, the transceiver unit may be a transceiver or an input/output interface, and the processing unit may be at least one processor. Optionally, the transceiver may be a transceiver circuit. Optionally, the input/output interface may be an input/output circuit.

In another implementation, the transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

According to a tenth aspect, a communication apparatus is provided. The apparatus is configured to perform the method provided in the third aspect. Specifically, the communication apparatus may include units and/or modules configured to perform the method provided in the third aspect, for example, a processing unit and an obtaining unit.

In an implementation, the transceiver unit may be a transceiver or an input/output interface, and the processing unit may be at least one processor. Optionally, the transceiver may be a transceiver circuit. Optionally, the input/output interface may be an input/output circuit.

According to an eleventh aspect, a communication apparatus is provided. The apparatus is configured to perform the method provided in the fourth aspect. Specifically, the communication apparatus may include units and/or modules configured to perform the method provided in the fourth aspect, for example, a processing unit and an obtaining unit.

In an implementation, the transceiver unit may be a transceiver or an input/output interface, and the processing unit may be at least one processor. Optionally, the transceiver may be a transceiver circuit. Optionally, the input/output interface may be an input/output circuit.

In another implementation, the transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

In another implementation, the transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

According to a twelfth aspect, this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a thirteenth aspect, a computer-readable storage medium is provided. The computer-readable storage medium stores program code executed by a device, and the program code is used to perform the methods provided in the foregoing aspects.

According to a fourteenth aspect, a computer program product including instructions is provided. When the computer program product runs on a computer, the computer is enabled to perform the methods provided in the foregoing aspects.

According to a fifteenth aspect, a chip is provided. The chip includes a processor and a communication interface, and the processor reads, through the communication interface, instructions stored in a memory, to perform the methods provided in the foregoing aspects.

Optionally, in an implementation, the chip further includes the memory. The memory stores a computer program or the instructions. The processor is configured to execute the computer program or the instructions stored in the memory. When the computer program or the instructions are executed, the processor is configured to perform the methods provided in the foregoing aspects.

According to a sixteenth aspect, a communication system is provided, including the terminal device in the eighth aspect, the communication apparatus in the ninth aspect, the communication apparatus in the tenth aspect, and the communication apparatus in the eleventh aspect.

### BRIEF DESCRIPTION OF DRAWINGS

FIG. 1 is a diagram of a communication system to which an embodiment of this application is applicable;
FIG. 2A and FIG. 2B are a schematic flowchart of a communication method according to an embodiment of this application;
FIG. 3 is a schematic flowchart of another communication method according to an embodiment of this application;
FIG. 4 is a schematic flowchart of still another communication method according to an embodiment of this application;
FIG. 5 is a schematic flowchart of still another communication method according to an embodiment of this application;
FIG. 6 is a block diagram of a communication apparatus according to an embodiment of this application; and
FIG. 7 is a block diagram of another communication apparatus according to an embodiment of this application.

### DESCRIPTION OF EMBODIMENTS

The following describes technical solutions of embodiments in this application with reference to accompanying drawings.

The technical solutions in embodiments of this application may be applied to a communication system in which a blockchain is integrated with a current existing communication network or a future communication network. The current existing communication network or the future communication network includes but is not limited to: a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, a device-to-device (device-to-device, D2D) communication system, a vehicle-to-everything (vehicle-to-everything, V2X) communication system, a machine-to-machine (machine-to-machine, M2M) communication system, a machine type communication (machine type communication, MTC) system, an internet of things (internet of things, IoT) communication system, a 6th generation (6th generation, 6G) mobile communication system, or the like.

For ease of understanding of embodiments of this application, the following briefly describes a communication system to which embodiments of this application are applicable by using an example in which a blockchain is integrated with a 6G communication network.

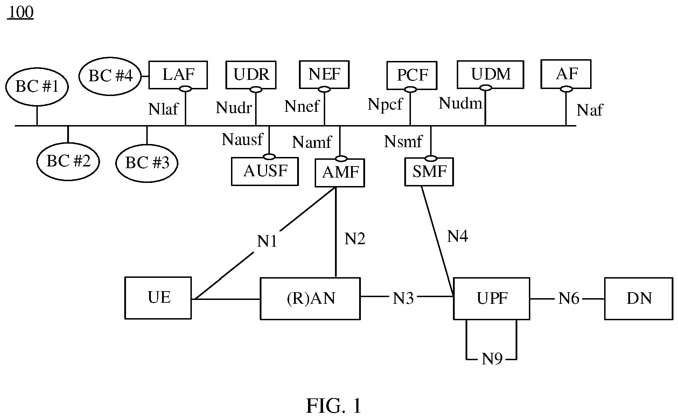

The technical solutions in embodiments of this application may be applied to a network architecture in which a blockchain is integrated with a 6G communication network shown in FIG. 1, or certainly may be applied to a network architecture in which a blockchain is integrated with a future communication network, for example, the network architecture in which the blockchain is integrated with the future communication network. This is not specifically limited in embodiments of this application.

With reference to FIG. 1, the following describes, by using an example, a communication system in which a blockchain is integrated with a 6G communication network and to which embodiments of this application are applicable. It should be understood that the 6G system described in this specification is merely an example, and should not constitute any limitation on this application.

It should be further understood that some network elements in the 6G system may communicate with each other through a service-oriented interface or a point-to-point interface. The following describes a 6G system framework based on a service-oriented interface with reference to FIG. 1.

For example, FIG. 1 is a diagram of an architecture of a communication system 100 in which a blockchain is integrated with a 6G communication network and to which an embodiment of this application is applicable. The network architecture may include but is not limited to the following network elements (or referred to as functional network elements, functional entities, nodes, devices, or the like):
user equipment (user equipment, UE), a (radio) access network (radio access network, (R)AN) device, a 6G core network (6G core, 6GC), a data network (data network, DN), and a blockchain (blockchain, BC), where the 6GC includes but is not limited to the following network elements:
an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, an authentication server function (authentication server function, AUSF), a unified data management (unified data management, UDM), a network exposure function (network exposure function, NEF) network element, a unified data repository (unified data repository, UDR), a ledger anchor function (ledger anchor function, LAF) network element, and the like.

The following briefly describes the network elements shown in FIG. 1.
1. UE: The UE is a terminal that communicates with a (R)AN, and may also be referred to as a terminal device (terminal equipment), an access terminal, a subscriber unit, a subscriber station, a mobile console, a mobile station (mobile station, MS), a mobile terminal (mobile terminal, MT), a remote station, a remote terminal, a mobile device, a user terminal, a terminal, a wireless communication device, a user agent, or a user apparatus. The terminal device may be a device that provides voice/data connectivity for a user, for example, a handheld device or a vehicle-mounted device having a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, an unmanned aerial vehicle, a terminal device in a 6G network, or a terminal device in a future evolved public land mobile network (public land mobile network, PLMN).

In addition, the terminal device may alternatively be a terminal device in an internet of things (Internet of things, IoT) system. IoT is an important part of development of information technologies in the future, and has a main technical feature of connecting things to a network by using a communication technology, to implement an intelligent network for human-machine interconnection and thing-thing interconnection. The IoT technology can achieve massive connections, deep coverage, and terminal power saving by using, for example, a narrowband (narrowband, NB) technology.

It should be understood that the terminal device may be any device that can access a network. The terminal device and an access network device may communicate with each other by using a specific air interface technology.

Optionally, the user equipment may be configured to serve as a base station. For example, the user equipment may serve as a scheduling entity that provides a sidelink signal between user equipments in V2X or D2D. For example, a cellular phone and an automobile communicate with each other via a sidelink signal. The cellular phone communicates with a smart home device without relaying a communication signal by a base station.

2. (R)AN: The (R)AN is configured to provide a network access function for authorized user equipment in a specific area, and can use transmission tunnels of different quality of service based on a level of the user equipment, a service requirement, and the like.

The (R)AN can manage radio resources and provide an access service for user equipment, to forward a control signal and user equipment data between the user equipment and a core network. The (R)AN may also be understood as a base station in a conventional network.

For example, the access network device in embodiments of this application may be any communication device that has a wireless transceiver function and that is configured to communicate with the user equipment. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseband unit, BBU), an access point (access point, AP) in a wireless fidelity (wireless fidelity, Wi-Fi) system, a radio relay node, a radio backhaul node, a transmission point (transmission point, TP) or a transmission and reception point (transmission and reception point, TRP), a satellite, a terminal device that undertakes a base station function in D2D communication, and the like.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified as an access network device in the radio access network (radio access network, RAN), or the CU may be classified as an access network device in the core network (core network, CN). This is not limited in this application.

3. User plane network element: The user plane network element is configured to perform packet routing and forwarding, quality of service (quality of service, QoS) handling for user plane data, and the like.

As shown in FIG. 1, in the 6G communication system, the user plane network element may be a UPF network element, and may include an intermediate user plane function (intermediate user plane function, I-UPF) network element and a PDU Session anchor user plane function (PDU Session anchor user plane function, PSA-UPF) network element. In a future communication system, the user plane network element may still be the UPF network element, or may have another name. This is not limited in this application.

4. Data network: The data network is configured to provide a network for data transmission.

In a future communication system, the data network may still be a DN, or may have another name. This is not limited in this application.

In the 6G communication system, after accessing a network, a terminal device may establish a protocol data unit (protocol data unit, PDU) session, access the DN by using the PDU session, and interact with an application function network element (the application function network element is, for example, an application server) deployed in the DN. As shown in FIG. 1, based on different DNs accessed by a user, the network may select a UPF that accesses the DN as a PDU session anchor (PDU Session Anchor, PSA) according to a network policy, and access the application function network element through an N6 interface of the PSA.

5. Access and mobility management network element: The access and mobility management network element is mainly configured to perform mobility management, access management, and the like, and may be configured to implement functions, for example, lawful intercept and access authorization/authentication, other than session management in functions of a mobility management entity (mobility management entity, MME).

As shown in FIG. 1, in the 6G communication system, the access management network element may be an AMF network element. In a future communication system, the access management network element may still be the AMF network element, or may have another name. This is not limited in this application.

6. Session management network element: The session management network element is mainly configured to: perform session management internet protocol (internet protocol, IP) address allocation and management of a terminal device, selection and management of a plane function of the terminal device, termination of interfaces towards policy control and charging functions, downlink data notification, and the like.

As shown in FIG. 1, in the 6G communication system, the session management network element may be an SMF network element, and may include an intermediate session management function (intermediate session management function, I-SMF) network element and an anchor session management function (anchor session management function, A-SMF) network element. In a future communication system, the session management network element may still be the SMF network element, or may have another name. This is not limited in this application.

7. Policy control network element: The policy control network element is configured to: support a unified policy framework to govern network behavior, provide policy rule information for a control plane function network element (for example, an AMF or SMF network element), and the like.

In a 4G communication system, the policy control network element may be a policy and charging rules function (policy and charging rules function, PCRF) network element. As shown in FIG. 1, in the 6G communication system, the policy control network element may be a PCF network element. In a future communication system, the policy control network element may still be the PCF network element, or may have another name. This is not limited in this application.

8. Data management network element: The data management network element is configured to perform identification handling of a terminal device, access authentication, registration, and mobility management, and the like.

As shown in FIG. 1, in the 6G communication system, the data management network element may be a UDM network element or a UDR network element. In a future communication system, the unified data management may still be the UDM network element or the UDR network element, or may have another name. This is not limited in this application.

The UDM network element or the UDR network element in embodiments of this application may be a user database, and may be used as a single logical repository for storing user data.

9. Application function network element: The application function network element may interact with the 6G system through an application function network element, and is configured to access a network exposure function network element or interact with a policy framework for policy control.

As shown in FIG. 1, in the 6G communication system, the application function network element may be an application function, AF network element. In a future communication system, the application function network element may still be the AF network element, or may have another name. This is not limited in this application.

10. Authentication server network element: The authentication server network element is configured to: perform an authentication service, generate a key to implement two-way authentication on a terminal device, and support a unified authentication framework.

As shown in FIG. 1, in the 6G communication system, the authentication server network element may be an AUSF network element. In a future communication system, the authentication server network element may still be the AUSF network element, or may have another name. This is not limited in this application.

11. Network exposure function network element: The network exposure function network element is configured to provide a customized network exposure function.

As shown in FIG. 1, in the 6G communication system, the network exposure function network element may be a network exposure function (network exposure function, NEF) network element. In a future communication system, the network exposure function network element may still be the NEF network element, or may have another name. This is not limited in this application.

The 6G communication system may further expose a capability supported by a 6GC to an external application function network element through the NEF network element, for example, a capability of providing small data transfer.

12. Ledger anchor function network element: As an interface between a communication network and a blockchain, the ledger anchor function network element is responsible for authorization and management of access and writing of a terminal device to a blockchain. An operator may mount different blockchain nodes on a bus. As an overall management anchor, the ledger anchor function network element is responsible for three functions: secondary authentication and authorization of access of the terminal device to the blockchain, chain configuration of the terminal device, and information on-chain processing of the terminal device.

13. Blockchain: Transactions on a network are generated and stored in blocks, and are linked to a chained structure in a chronological order. Confirmed and proven transactions on the network are linked from a start block to a latest block of the blockchain, and a ledger formed by linking a plurality of blocks is referred to as the blockchain.

A blockchain technology implements a chained data structure formed by sequentially linking data and information blocks in a chronological order, and implements distributed storage that cannot be tampered with and cannot be forged in a cryptographic manner. Generally, data and information in the blockchain are referred to as "transactions (Transactions)".

The blockchain technology is not a single technology, but a system that integrates application of peer-to-peer transmission, a consensus mechanism, distributed data storage, and a cryptography principle. The system has technical features of being fully open and tamper-proof.
(1) Peer-to-peer transmission: Nodes participating in the blockchain are independent and peer-to-peer, and synchronization of data and information is implemented between nodes by using a peer-to-peer transmission technology. The nodes may be different physical machines, or may be different instances on a cloud.
(2) Consensus mechanism: The consensus mechanism in the blockchain is a process in which nodes from a plurality of participants reach an agreement on specific data and information through interaction between nodes according to a preset logical rule. The consensus mechanism needs to depend on a well-designed algorithm. Therefore, different consensus mechanisms have different performance (for example, transactions per second (transactions per second, TPS), delays in reaching a consensus, consumed computing resources, and consumed transmission resources).
(3) Distributed data storage: The distributed storage in the blockchain means that nodes participating in the blockchain each store independent and complete data, ensuring that the data storage is fully open among the nodes. Different from conventional distributed data storage in which data is divided into a plurality of copies for backup or synchronous storage according to a specific rule, the distributed data storage in the blockchain implements highly consistent data storage based on a consensus between peer-to-peer and independent nodes in the blockchain.
(4) Cryptography principle: The blockchain usually implements trusted information dissemination, verification, and the like based on an asymmetric encryption technology.

A concept of "block" is to organize one or more data records in a form of a "block", and a size of the "block" may be customized based on an actual application scenario. A "chain" is a data structure, and the data structure connects "blocks" that store data records in a chronological order by using a hash technology. In the blockchain, each "block" includes two parts: a "block header" and a "block body". The "block body" includes transaction records packed into the "block". The "block header" includes root hashes of all transactions in the "block" and hashes in a previous "block". The data structure of the blockchain ensures that data stored on the blockchain cannot be tampered with.

Currently, blockchains can be classified into three categories: public blockchains, consortium blockchains, and private blockchains.

The public chain means that any archive node (peer) may be used as a consensus node (which may also be referred to as a consensus computing node) of the blockchain, to participate in consensus computing of data storage in the blockchain and maintain the blockchain anonymously, where nodes do not trust each other.

The consortium blockchain has added admission permission on the basis of the public chain, so that only a qualified node can be used as a consensus computing node of the blockchain, to participate in consensus computing of data storage in the blockchain and maintain the blockchain, where nodes trust each other to some extent.

Compared with the consortium blockchain, the private blockchain has a stricter admission mechanism, so that the blockchain and a consensus computing node of the blockchain are private.

For example, in a communication system in which a blockchain is integrated with 6G, the blockchain may be mounted on a bus, and communicate with a 6GC through a service-oriented interface, for example, a BC #1, a BC #2, and a BC #3 shown in FIG. 1. Alternatively, the blockchain may not be mounted on the bus, and communicates with an LAF through a communication interface, for example, a BC #4 shown in FIG. 1. That the blockchain is mounted on the bus may be understood as that at least one node on the blockchain communicates with the 6GC through the service-oriented interface. That the blockchain is not mounted on the bus, and communicates with the LAF through the communication interface may be understood as that at least one node on the blockchain communicates with the LAF through the communication interface.

As shown in FIG. 1, in the communication system in which a blockchain is integrated with 6G, the ledger anchor function network element may be an LAF. In a future communication system, the ledger anchor function network element may still be the LAF network element, or may have another name. This is not limited in this application.

It should be noted that the LAF may be an independently disposed functional network element, or may be a functional network element integrated with another functional network element. For example, a function of the AMF network element is enhanced, so that the AMF network element has a function of the LAF network element.

Interfaces between control plane network elements in FIG. 1 are service-oriented interfaces. Specifically, Nudr, Nausf, Nnef, Namf, Npcf, Nsmf, Nudm, Naf, and Nlaf in FIG. 1 are respectively examples of service-oriented interfaces exhibited by the UDR, AUSF, NEF, AMF, PCF, SMF, UDM, AF, and LAF, and are configured to invoke corresponding service-oriented operations. N1, N2, N3, N4, N9, and N6 are interface sequence numbers.
(1) N1: N1 is an interface between the AMF and the terminal, and may be configured to transfer a QoS control rule or the like to the terminal.
(2) N2: N2 is an interface between the AMF and the RAN, and may be configured to transfer radio bearer control information or the like from a core network side to the RAN.
(3) N3: N3 is an interface between the RAN and the UPF, and is mainly configured to transfer uplink and downlink user plane data between the RAN and the UPF.
(4) N4: N4 is an interface between the SMF and the UPF, and may be configured to transfer information between a control plane and a user plane, including delivering a forwarding rule, a QoS control rule, a traffic statistics rule, or the like from the control plane to the user plane, and reporting information on the user plane.
(5) N9: N9 is a user plane interface between UPFs, and is configured to transfer uplink and downlink user data flows between the UPFs.
(6) N6: N6 is an interface between the UPF and the DN, and is configured to transfer uplink and downlink user data flows between the UPF and the DN.

Specifically, for meanings of these interface sequence numbers, refer to meanings defined in the 3rd generation partnership project (3rd generation partnership project, 3GPP) standard protocol. This is not limited herein.

It may be understood that the foregoing network elements or functions may be network elements in a hardware device, may be software functions running on dedicated hardware, or may be virtualized functions instantiated on a platform (for example, a cloud platform). One or more services may be obtained through division into the foregoing network elements or functions. Further, services that exist independently of network functions may occur. In this application, instances of the functions, instances of the services included in the functions, or instances of the services that exist independently of the network functions may be referred to as service instances.

Further, the AF network element may be referred to as an AF for short, the LAF network element may be referred to as an LAF for short, and the AMF network element may be referred to as an AMF for short. That is, in the following of this application, the AF may be replaced with the application function network element, the LAF may be replaced with the ledger anchor function network element, and the AMF may be replaced with the access and mobility management network element.

It may be understood that the foregoing network elements or functional network elements may be network elements in a hardware device, may be software functions running on dedicated hardware, or may be virtualized functions instantiated on a platform (for example, a cloud platform). One or more services may be obtained through division into the foregoing network elements or functions. Further, services that exist independently of network functions may occur. In this application, instances of the functions, instances of the services included in the functions, or instances of the services that exist independently of the network functions may be referred to as service instances.

It should be understood that the network architecture to which embodiments of this application can be applied is merely an example for description, and the network architecture to which embodiments of this application are applicable is not limited thereto. Any network architecture that can implement functions of the foregoing network elements is applicable to embodiments of this application.

It should be further understood that the AMF, the SMF, the UPF, the PCF, the NEF, and the like shown in FIG. 1 may be understood as network elements configured to implement different functions, for example, may be combined into a network slice as required. These network elements may be independent devices, may be integrated into a same device to implement different functions, may be network elements in a hardware device, may be software functions running on dedicated hardware, or may be virtualized functions instantiated on a platform (for example, a cloud platform). Specific forms of the foregoing network elements are not limited in this application.

It should be further understood that the foregoing names are defined merely for distinguishing between different functions, and should not constitute any limitation on this application. This application does not exclude a possibility of using other names in a 6G network and another future network. For example, in the 6G network, a part or all of the foregoing network elements may still use terms in 6G, or may have other names.

It should be further understood that names of interfaces between the network elements in FIG. 1 are merely examples, and the interfaces may have other names during specific implementation. This is not specifically limited in this application. In addition, names of messages (or signaling) transmitted between the foregoing network elements are merely examples, and do not constitute any limitation on functions of the messages.

For ease of understanding of the technical solutions in embodiments of this application, some terms or concepts that may be used in embodiments of this application are first briefly described.
1. On-chain configuration: The on-chain configuration means that data that needs to be sent to a blockchain is configured by using a configuration message, for example, a data type.
2. Data on-chain: The data on-chain means that data is packed into a block by using a consensus mechanism to obtain a new block, and linked to a previous block to become data that cannot be tampered with on a chain.
3. Admission mechanism: A membership service provider (membership service provider, MSP) module on a blockchain node is responsible for identity management, and mainly completes functions such as digital certificate verification, signature and verification, and private key management. A smart contract can implement access control at a plurality of levels based on a digital certificate, an MSP ID, and an attribute field of an invoker.
4. Extensible authentication protocol (Extensible Authentication Protocol, EAP): The EAP is a set of authentication modes, and is designed to meet an authentication requirement of any link layer and support a plurality of link layer authentication modes. The EAP protocol is a core of an IEEE 802.1x authentication mechanism.

In an 802.1X-compliant wireless local area network, one user requests to access one access point, and the access point forces the user to enter an unauthorized state. In this state, the user can send only one EAP start message. Then, the access point returns one EAP message to the user, to request the user to perform authentication. The user sends the authentication to the access point, and then the access point forwards the authentication to an authentication server, so that the authentication server uses an algorithm to verify whether the user is authorized and returns an accept message or a reject message to the access point. When the authentication succeeds, that is, the accept message is received, the access point changes the status of the user to authorized. In this case, normal communication can be performed.

5. 6G communication network: A 6G network can be composed of air, sky, earth, and sea in space, and composed of a plurality of devices in device composition. An actual network carrier can be composed of platforms of low and medium-altitudes such as a satellite network and an unmanned aerial vehicle, a cellular network, internet of vehicles, an IoT network, a water surface network, and an underwater network. A 6G network terminal is an important part of supporting a 6G service application. The 6G network extends a form and a function of a 5G communication terminal. The 6G network terminal includes but is not limited to a vehicle, a cellular network terminal (integrated with a satellite terminal function), an unmanned aerial vehicle, and IoT. In addition, compared with the 5G network terminal, the 6G network terminal has an enhanced capability. For example, a computing capability and a communication capability of the vehicle are greatly improved, which can meet a basic requirement of blockchain running. In addition, a blockchain finely designed based on the 6G network can support more forms of terminals.

The 6G network features cross-industry and multi-device deep participation. Different devices in the network can provide different businesses and services. Different devices may belong to different operators rather than a single operator. Therefore, the 6G network requires a mechanism and platform for mutual trust between a plurality of parties.

A blockchain technology essentially changes the trust logic of human society, and can well meet the foregoing requirement of the 6G network.

The blockchain is a distributed ledger that integrates a plurality of technologies such as a cryptography technology, a P2P network, and a distributed database. The blockchain is a chained (chain) data structure formed by generating and storing data in blocks (block) and linking the data in a chronological order, where all nodes jointly participate in data verification, storage, and maintenance of a blockchain system. Therefore, creation of a new block needs to be confirmed by consensus, and is broadcast to all the nodes to implement network-wide synchronization. Subsequently, it is difficult to change or delete the block. Therefore, a lack of a trust capability in a communication network can be effectively compensated for by using a natural trust attribute of the blockchain. The following briefly describes integration of a blockchain and a 6G communication network.

6. Integration of a blockchain and a 6G communication network: Application of the blockchain to the 6G communication network (or a future communication network) may provide new ideas and more possibilities for enhancing security and trustworthiness and cross-industry and cross-domain management for the 6G communication network. Depending on features of the blockchain technology, the blockchain may be used as a unified trusted platform to implement historical event tracing and automatic network management, such as log audit, automatic settlement, and secure access and verification.

Specifically, the integration of the blockchain and the 6G communication network may provide the following two requirements:
(1) Blockchain resource service.

Due to a requirement of a communication network, an operator has service data of a terminal, such as user profile (profile) information, location information, identification (identify, ID) information, public land mobile network (Public Land Mobile Network, PLMN) information, and service information. The blockchain may provide a user with personal information (for example, a trip during an epidemic) related to the user for use.

In addition, the blockchain may also collect various types of sensing and mapping data as services and provide the services for the user, for example, road condition information, traffic information, and environment information in internet of vehicles. The operator may establish a secure and tamper-proof data sharing platform for the user by using the blockchain.

(2) The blockchain requires a terminal device to report information such as an environment, a key performance indicator (Key Performance Indicator, KPI), and mapping.

KPI indicator data information generated by actual operations in a conventional network is mainly collected locally by a base station, then directly reported to a local sub-network management and database system through a private interface, and next reported to a higher-level network management and data center through hierarchical summary statistics. By using a blockchain technology, the terminal device may report various types of network KPI data in real time (for example, to a blockchain or a network).

New services require a large amount of user mapping data. For example, sensors of test vehicles usually capture images and information of other vehicles, pedestrians, and bicycles, and traffic signs, traffic lights, roadsides, lanes, other infrastructure, and road landscapes. In the IoT network, humidity, temperature, and environment conditions of the environment are measured. The network may record and store mapping data by using the blockchain.

7. Smart contract: The smart contract is a computer protocol intended to disseminate, verify, or execute a contract in an informatization manner. The smart contract allows trusted transactions to be performed without a third party. These transactions are traceable and irreversible. Permission to invoke a smart contract in embodiments of this application is similar to a "write" operation. To be specific, data on-chain may be directly "writing" data to a blockchain, or may be implemented by invoking a smart contract.

It can be learned from the foregoing descriptions that the blockchain is integrated with the 6G communication network, and the blockchain may provide functions such as a resource service and information reporting. Currently, a related technology in which the blockchain is integrated with the 6G communication network involves only on-chain of subscription data of the terminal device, and does not involve access of the terminal device to the blockchain. This application provides a communication method, to support a terminal device in a communication system to access a blockchain, thereby helping an operator establish a secure and tamper-proof data sharing platform for the terminal device by using the blockchain.

The foregoing describes the scenario to which embodiments of this application can be applied with reference to FIG. 1, and further briefly describes the basic concepts in this application. The following describes in detail a communication method provided in this application with reference to the accompanying drawings.

A specific structure of an execution body of a method provided in embodiments of this application is not particularly limited in the following embodiments provided that communication can be performed according to the method provided in embodiments of this application by running a program that records code of the method provided in embodiments of this application. For example, the method provided in embodiments of this application may be performed by a core network device, or a functional module that is in the core network device and that can invoke and execute the program.

For ease of understanding of embodiments of this application, the following descriptions are provided.

First, in this application, "indicate" may be understood as "enable", and "enable" may include "directly enable" and "indirectly enable". When a piece of information is described to enable A, it may indicate that the information directly enables A or indirectly enables A, but it does not indicate that A is definitely carried in the information.

Information enabled by the information is referred to as to-be-enabled information. In a specific implementation process, the to-be-enabled information is enabled in many manners, for example, including but not limited to the following: The to-be-enabled information may be directly enabled, for example, the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, so as to reduce enabling overheads to some extent. In addition, a common part of all information may be identified and enabled in a unified manner, so as to reduce enabling overheads caused by enabling the same information separately.

Second, various numeric numbers such as first and second (for example, "#1" and "#2") shown in this application are merely for ease of description, and are used to distinguish between objects, but are not intended to limit the scope of embodiments of this application, for example, are used to distinguish between different messages, but are not used to describe a particular order or sequence. It should be understood that the objects described in such a way are interchangeable in a proper circumstance, so that a solution other than embodiments of this application can be described.

Third, in this application, "preset" may include "predefined", for example, defined in a protocol. "Predefined" may be implemented in a manner of prestoring corresponding code, a table, or other related information that may be used for indication in a device (for example, including network elements). A specific implementation is not limited in this application.

Fourth, "stored" in embodiments of this application may be "stored in one or more memories". The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification usually indicates an "or" relationship between associated objects.

Sixth, "protocols" in embodiments of this application may be standard protocols in the communication field, for example, may include a 6G protocol, a new radio (new radio, NR) protocol, and a related protocol applied to a future communication system. This is not limited in this application.

Seventh, that one piece of information (for example, information #1) "includes" another piece of information (for example, information #2) in embodiments of this application may be understood as that the information #1 explicitly carries or implicitly carries the information #2. For example, the information #1 directly carries the information #2. For another example, the information #1 carries indication information indicating the information #2, and a receive end device receiving the information #1 may obtain the information #2 based on the indication information. The indication information indicating the information #2 may be predefined or specified in a protocol, or may be explicitly or implicitly indicated.

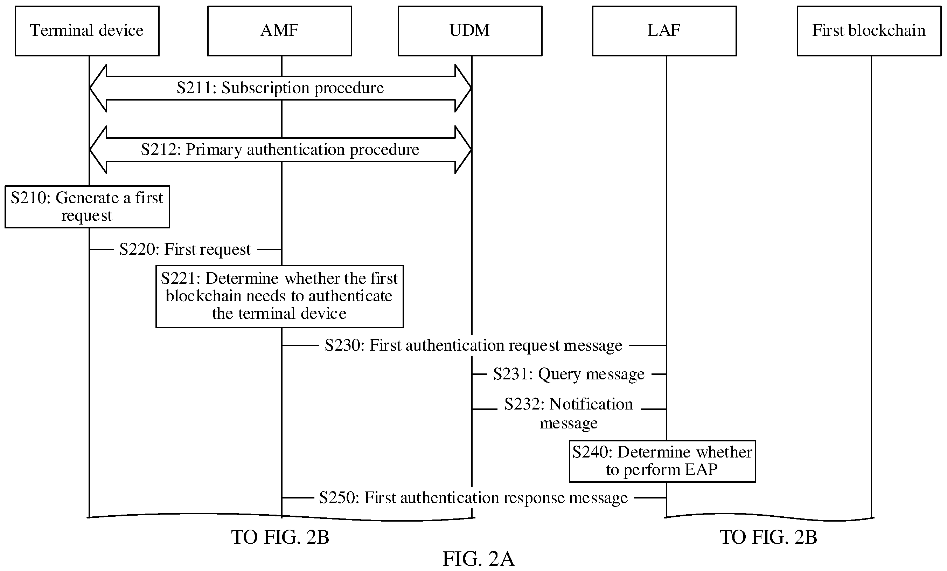

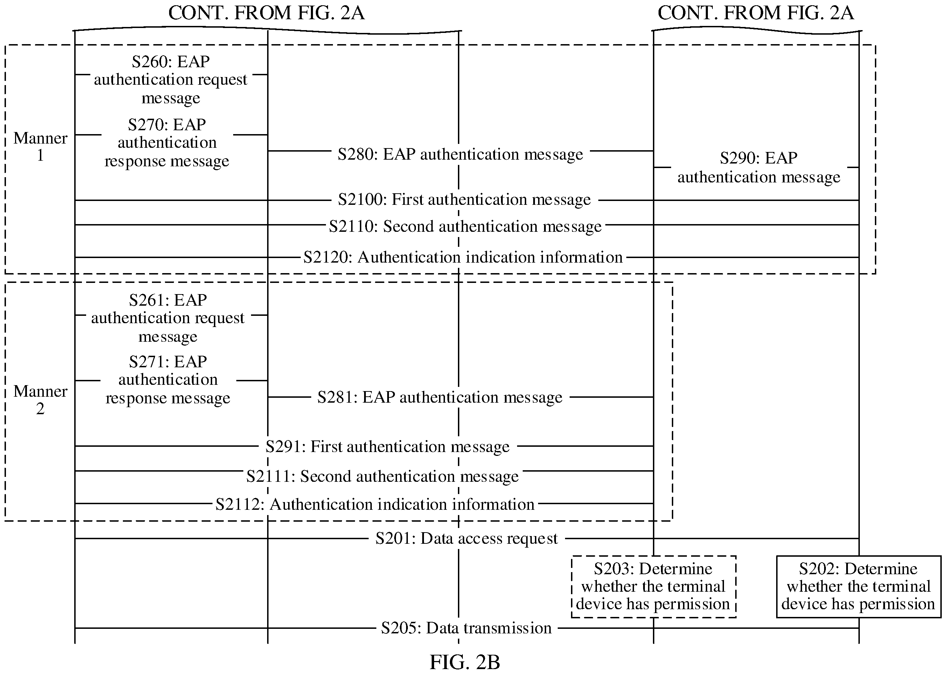

Without loss of generality, the following uses interaction between network elements as an example to describe in detail the communication method provided in embodiments of this application. The communication method is applied to a scenario in which a blockchain is integrated with a communication system (for example, a 6G communication system) (for example, the scenario shown in FIG. 1). FIG. 2A and FIG. 2B are a schematic flowchart of a communication method according to an embodiment of this application. The method includes the following step:
S210: A terminal device generates a first request.

The first request is used to request to access a first blockchain. Specifically, the first request includes information about the first blockchain. Accessing the first blockchain may be that the terminal device needs to send second data to the first blockchain, or may be that the terminal device needs to obtain first data from the first blockchain, or may be that the terminal device invokes a smart contract on the first blockchain.

It may be understood that the terminal device may initiate a request for accessing the first blockchain when the terminal device has at least one of the following requirements for the first blockchain: reading, writing, or invoking a smart contract.

A blockchain (blockchain, BC) in this application may also be understood as one of distributed ledgers (Ledgers).

For example, when determining that the first blockchain needs to be accessed, the terminal device generates the first request.

In a possible implementation, the terminal device may determine, based on local configuration information, that the first blockchain needs to be accessed. For example, the configuration information indicates the terminal device to store specific data on the first blockchain.

In another possible implementation, the terminal device may determine, based on an indication of another device, that the first blockchain needs to be accessed. For example, the terminal device receives indication information that is of the another device and that indicates to obtain information from the first blockchain.

It should be noted that, in this embodiment of this application, how the terminal device determines to access the first blockchain is not limited. The terminal device may determine to access the first blockchain in any case in which the first blockchain needs to be accessed.

In addition, it should be noted that the first blockchain may be one or more blockchains. In other words, the terminal device may determine to initiate access to a plurality of blockchains. For ease of description, blockchains that need to be accessed by the terminal device are collectively referred to as the first blockchain.

Further, to access the first blockchain, the terminal device sends the first request to a first network element. The method procedure shown in FIG. 2A and FIG. 2B further includes the following step:
S220: The terminal device sends the first request to the first network element, or the first network element receives the first request from the terminal device.

For example, the first network element is a functional network element that has functions of access authorization and management for a blockchain. The first network element includes but is not limited to a network element such as an LAF, an AMF, an AUSF, or an SEAF. It should be understood that a name of the first network element is not limited in this embodiment of this application.

In a possible implementation, when the LAF and the AMF (or the SEAF/AUSF) are integrated, that is, a function of the LAF is integrated into the AMF (or the SEAF/AUSF), the first network element may be the AMF (or the SEAF/AUSF), and the terminal device may directly send the first request to the first network element.

In another possible implementation, when the LAF is independently disposed, the first network element may be the LAF, and that the terminal device sends the first request to the first network element may be understood as: The terminal device sends the first request to the LAF. For example, as shown in FIG. 2A and FIG. 2B, the first request is forwarded by the AMF (or the SEAF). Alternatively, when there is a communication interface between the LAF and the terminal device, the terminal device may directly send the first request to the LAF.

For ease of description, in this embodiment of this application, an example in which the LAF is independently disposed, the first network element is the LAF, and a network element forwarding a message between the terminal device and the LAF is the AMF is used for description.

Optionally, the information about the first blockchain may be an identifier of the first blockchain or an identifier of a blockchain group to which the first blockchain belongs.

For example, if the terminal device determines that the blockchains that need to be accessed include a blockchain #1, a blockchain #2, and a blockchain #3, where an ID of the blockchain #1 is an ID #1, an ID of the blockchain #2 is an ID #2, and an ID of the blockchain #3 is an ID #3, the information about the first blockchain may be the ID #1, the ID #2, and the ID #3.

For ease of understanding, a possible form of the information about the first blockchain accessed by the terminal device at a granularity of a single blockchain is described with reference to Table 1:

**Table 1**

| Information about the first blockchain | Blockchain | Address |
|---|---|---|
| ID #1 | Ledger #1 | IP #1-1 or IP #1-2 |
| ID #2 | Ledger #2 | IP #2-1 |
| ID #3 | Ledger #3 | IP #3-1 or IP #3-2 |

As shown in Table 1, a blockchain may correspond to a plurality of addresses (for example, the ledger #1 corresponds to the IP #1-1 and the IP #1-2). It may be understood that the blockchain includes a plurality of nodes, and IP addresses of the nodes are different. For example, the ledger #1 includes a node #1 and a node #2, where an address of the node #1 is the IP #1-1, and an address of the node #2 is the IP #1-2.

For another example, if the terminal device determines that the blockchains that need to be accessed include a blockchain #1, a blockchain #2, and a blockchain #3, where the blockchain #1, the blockchain #2, and the blockchain #3 belong to a blockchain group #1, and an identifier of the blockchain group #1 is a group ID #1, the information about the first blockchain may be the group ID #1.

For ease of understanding, a possible form of the information about the first blockchain accessed by the terminal device at a granularity of a blockchain group is described with reference to Table 2:

**Table 2**

| Information about the first blockchain | Blockchain | Address |
|---|---|---|
| Group ID #1 | Ledger #1, Ledger #2, Ledger #3 | IP #1-1 or IP #1-2, IP #2-1, IP #3-1 or IP #3-2 |
| Group ID #2 | Ledger #2, Ledger #4 | IP #2-1, IP #4-1, IP #4-2, or IP #4-3 |
| Group ID #3 | Ledger #5 | IP #5-1 |

It should be understood that the information about the first blockchain is not limited in this embodiment of this application. The identifier of the first blockchain and the identifier of the blockchain group to which the first blockchain belongs are merely examples, and do not constitute any limitation on the protection scope of this application. Other information that can identify the first blockchain also falls within the protection scope of this application, for example, type indication information of the first blockchain.

Optionally, the first request may further include an identifier of the terminal device, and the identifier of the terminal device includes but is not limited to:
a subscription permanent identifier (Subscription Permanent Identifier, SUPI), a subscription concealed identifier (Subscription Concealed Identifier, SUCI), a generic public subscription identifier (Generic Public Subscription Identifier, GPSI), a permanent equipment identifier (Permanent Equipment Identifier, PEI), or a mobile subscriber international ISDN/PSTN number (Mobile Subscriber International ISDN/PSTN number, MSISDN) of UE, where the ISDN is an integrated services digital network (Integrated Services Digital Network), the PSTN is a public switched telephone network (Public Switched Telephone Network) or the like, and the MSISDN may be understood as an identity of the terminal that can be disclosed externally, for example, a phone number of the terminal.

Optionally, the first request may further include a session identifier. On a premise that a session is established between the terminal device and a network, the first request may further include the session identifier.

Optionally, the first request may further include at least one of the following information:
an identifier of a transaction, an identifier of a block, a world status, or an index.

The identifier of the transaction indicates a transaction (or a type of transaction), and includes but is not limited to a transaction format, a transaction type, and the like. It should be understood that the transaction indicated by the identifier of the transaction may be a transaction having a specific feature, and is not limited to a specific transaction.

The identifier of the block indicates a block (or a type of block), and includes but is not limited to a block (or a type of block) on a blockchain. It should be understood that the block indicated by the identifier of the block may be a block having a specific feature, and is not limited to a specific block.

The world status indicates an overall status of a blockchain, for example, account information and an account status. The account information may be an identifier of an account.

The index may indicate an index of information, for example, a keyword.

For example, if the terminal device determines that the first blockchain needs to be accessed after the terminal device accesses the network, the method procedure shown in FIG. 2A and FIG. 2B further includes the following step:
S211: The terminal device executes a subscription procedure.

Specifically, that the terminal device executes a subscription procedure includes: A user subscribes to an operator when applying for a card. The operator stores subscription data of the terminal device.

In a possible implementation, the operator stores the subscription data of the terminal device in a UDM.

In another possible implementation, the operator stores the subscription data of the terminal device in a blockchain.

In still another possible implementation, the operator stores the subscription data of the terminal device in an entity that can store the subscription data of the terminal device, for example, an entity that can store the subscription data of the terminal device in a future communication system.

It should be noted that the foregoing is merely an example for describing that the operator may store the subscription data of the terminal device in different storage manners, and does not constitute any limitation on the protection scope of this application. How the operator stores the subscription data of the user is not limited in this embodiment of this application.

For example, the subscription data of the terminal device includes information provided when the terminal device subscribes. For specific included content, refer to current descriptions about the subscription data.

Further, the subscription data of the terminal device in this embodiment includes information indicating a blockchain set that the terminal device has permission to access. Optionally, the subscription data of the terminal device further includes information indicating an authentication manner corresponding to a blockchain in a blockchain set.

For example, whether the terminal device has permission to access a blockchain may be understood as whether the terminal device can access the blockchain, or may be understood as whether the terminal device has a capability of accessing the blockchain.

Specifically, the information indicating the blockchain set that the terminal device has permission to access may be: When the subscription data of the terminal device includes the information about the blockchain set, the blockchain set that the terminal device has permission to access is indicated.

The information about the blockchain set includes but is not limited to an ID of a blockchain or an ID of a blockchain group.

For example, the subscription data of the terminal device includes the ID #1 and the ID #2, where the ID #1 is the ID of the blockchain #1, and the ID #2 is the ID of the blockchain #2, indicating that the terminal device has permission to access the blockchain #1 and the blockchain #2. The subscription data of the terminal device does not include the ID #3, where the ID #3 is the ID of the blockchain #3, indicating that the terminal device does not have permission to access the blockchain #3.

For another example, the subscription data of the terminal device includes the group ID #1, where the group ID #1 is the identifier of the blockchain group #1 to which the blockchain #1, the blockchain #2, and the blockchain #3 belong, indicating that the terminal device has permission to access the blockchain #1, the blockchain #2, and the blockchain #3.

It should be understood that the foregoing is merely an example for describing a possible form of the information that is included in the subscription data of the terminal device and that is about the blockchain that can be accessed by the terminal device, and does not constitute any limitation on the protection scope of this application. For example, the blockchain that can be accessed may be further indicated by indicating a type of data that needs to be accessed.

It should be noted that the blockchain set may include one or more blockchains, that is, the terminal device may access a plurality of blockchains. For ease of description, blockchains that can be accessed by the terminal device are collectively referred to as the blockchain set.

In addition, it should be noted that the blockchain set that the terminal device has permission to access includes all blockchains that can be accessed by the terminal device.

In a possible implementation, the first blockchain that the terminal device requests to access may belong to the blockchain set.

For example, the blockchain set includes the blockchain #1, the blockchain #2, and the blockchain #3, and the first blockchain includes the blockchain #1 and the blockchain #2.

In a possible implementation, the first blockchain that the terminal device requests to access does not belong to the blockchain set.

For example, the blockchain set includes the blockchain #1, the blockchain #2, and the blockchain #3, and the first blockchain includes the blockchain #4.

Optionally, when the first request includes the identifier of the transaction, the subscription data of the terminal device further includes information indicating a transaction set that the terminal device has permission to access. When the first request includes the identifier of the block, the subscription data of the terminal device further includes information indicating a block set that the terminal device has permission to access. When the first request includes the identifier of the account, the subscription data of the terminal device further includes information indicating an account set that the terminal device has permission to access.

Specifically, when the terminal device subscribes to access the network, the network needs to perform access authentication on the terminal device. The method procedure shown in FIG. 2A and FIG. 2B further includes the following step:
S212: Execute a primary authentication procedure.

For ease of differentiation, authentication performed in a network access phase may be referred to as a primary authentication (primary-authentication) procedure, that is, the network performs access authentication on the terminal device.

The primary authentication procedure includes user authentication, for authenticating the terminal device that attempts to access the network and checks whether the terminal device has permission to access the network. A specific primary authentication procedure is not limited in this application. For details, refer to existing descriptions of access authentication on the terminal device. Details are not described herein.

In a possible implementation, the terminal device may send the first request to the LAF after the primary authentication procedure is completed.

Optionally, when primary authentication has been completed to establish the session between the terminal device and the network, the first request further includes the session identifier.

In another possible implementation, before the primary authentication, the terminal device may request to access a blockchain, and the first request may be a registration request message.

It can be learned from the foregoing description that the first request is forwarded by the AMF to the LAF. Specifically, after receiving the first request, the AMF may determine whether the blockchain that the terminal device requests to access needs to be authenticated. The method procedure shown in FIG. 2A and FIG. 2B further includes the following step:
S221: The AMF determines whether the first blockchain needs to authenticate the terminal device.

Specifically, the AMF determines, based on the received information about the first blockchain, whether the first blockchain needs to authenticate the terminal device.

For example, when the first blockchain is all blockchains that can be accessed by the terminal device, the first blockchain may not need to authenticate the terminal device. For another example, when the first blockchain is a blockchain of a specific service, the first blockchain needs to authenticate the terminal device.

That the AMF determines, based on the received information about the first blockchain, whether the first blockchain needs to authenticate the terminal device includes:
The AMF determines the to-be-accessed first blockchain based on the received information about the first blockchain, and determines, based on a profile (profile) of the first blockchain, whether the first blockchain needs to authenticate the terminal device.

For example, the profile of the first blockchain includes at least one of the following information:
basic blockchain information, blockchain on-chain policy information, or blockchain status management view information.

The basic blockchain information includes but is not limited to: a ledger ID (Ledger ID), a channel ID (Channel ID), a ledger type (Ledger type), a ledger state (Ledger state) (for example, a transactions per second (Transactions per second, TPS) state or an active account state), a ledger member (Members of the Committee), an IP address (IP addresses), a fully qualified domain name (Fully Qualified Domain Name, FQDN) of a full/archive node (the full/archive nodes), a consensus mechanism (Consensus mechanism), ledger application related information (Ledger application related information), a ledger architecture (Ledger architecture), an authentication mechanism (Authentication mechanism), and the like.

The blockchain policy information includes but is not limited to: a required information type, a policy for triggering on-chain of data of a terminal device or an access network device (for example, a time interval-based on-chain policy, a preconfigured on-chain policy, a location information-based on-chain policy, or a terminal device selection policy), a policy for on-chain of network element data (for example, a time interval-based policy, a preconfigured policy, a servicetriggered policy, or a network KPI-based policy), whether access is opened to a third party, an opening policy, and the like.

The chain status management view information includes but is not limited to: a trusted execution environment, a trusted hardware platform execution status, performance monitoring data of a Linux system (such as CPU usage and memory usage of the Linux system), log data (such as a Docker run log, a fabric run log, and an error log), monitoring and operations and maintenance (such as a blockchain network status, a block height, chaincode, and on-chain data), service data (such as channel data, transaction data, and data stored on the blockchain), compliance audit (such as compliance audit for a consortium blockchain network, setting up a sensitive word library to prevent on-chain of illegal information, setting up a complaint reporting mechanism, and joint supervision of initiators and participants, and maintaining data security of a consortium blockchain), and blockchain governance (such as freezing, unfreezing, deregistering, updating, or maintaining each chain).

It should be noted that, in this embodiment of this application, how the AMF learns of the profile of the first blockchain is not limited. The profile may be obtained from the UDM, or may be locally stored in the AMF.

In addition, in this embodiment of this application, a case in which the first blockchain needs to authenticate the terminal device is mainly considered, and the method procedure shown in FIG. 2A and FIG. 2B further includes the following step:
S230: The AMF sends a first authentication request message to the LAF, or the LAF receives a first authentication request message from the AMF.

The first authentication request message is used to request the first blockchain to authenticate the terminal device. Specifically, the first authentication request message includes the information about the first blockchain and the identifier of the terminal device.

Further, after receiving the first authentication request message, the LAF may query the subscription data of the terminal device and/or policy information from the UDM. The method procedure shown in FIG. 2A and FIG. 2B further includes the following step:
S231: The LAF sends a query message to the UDM, or the UDM receives a query message from the LAF.

The query message is used to query the subscription data of the terminal device and/or the policy information. The subscription data of the terminal device includes information indicating that the terminal device has permission to access a second blockchain, and the policy information includes information indicating that the terminal device has permission to access a third blockchain under a preset condition.

In a possible implementation, the query request is used to request to query the subscription data of the terminal device, for example, the information that is included in the subscription data of the terminal device stored by the operator in step S211 and that is about the blockchain that can be accessed by the terminal device.

For example, the information about the blockchain includes but is not limited to: information about a blockchain that can be accessed by the terminal device and authentication manners corresponding to different blockchains.

In another possible implementation, the query request is used to request to query the policy information.

For example, the policy information includes but is not limited to information about a blockchain that can be accessed by the terminal device under a preset condition.

For example, a blockchain that can be accessed and/or a blockchain that cannot be accessed when the terminal device is in a range of a location (for example, a cell) are/is included.

For another example, a blockchain that can be accessed and/or a blockchain that cannot be accessed when the identifier (for example, the SUPI) of the terminal device is a specific identifier are/is included.

For still another example, a blockchain that can be accessed and/or a blockchain that cannot be accessed when the access network device accessed by the terminal device is a specific access network device are/is included.

It should be understood that the foregoing is merely an example for describing a possible form of the policy information, and does not constitute any limitation on the protection scope of this application. Other information that can indicate the blockchain accessed by the terminal device under the preset condition falls within the protection scope of this application.

In still another possible implementation, the query request is used to request to query the subscription data of the terminal device and the policy information.

For ease of understanding, the subscription data of the terminal device and the policy information are described with reference to a specific example.

### Example 1:

The subscription data of the terminal device indicates that blockchains that can be accessed by the terminal device include the blockchain #1, the blockchain #3, and the blockchain #5. The blockchain #1 uses an authentication manner #1, the blockchain #3 uses an authentication manner #3, and the blockchain #5 uses an authentication manner #5.

The network policy information specifies that a terminal device under a specific condition can or cannot access a type of blockchain.

Optionally, a condition indicated by the network policy information is shown in Table 3.

**Table 3**

| Condition | Accessible blockchain | Inaccessible blockchain |
|---|---|---|
| Terminal device in a range of a location #1 | Blockchain #1, Blockchain #4 | Blockchain #2, Blockchain #3 |
| Terminal device with a SUPI #1 | ALL | NULL |
| Terminal device linked to an access network device #1 | Blockchain #1, Blockchain #2, Blockchain #3 | Blockchain #4 |
| A current network is connected | NULL | ALL |
| ... | ... | ... |

In this example, when the terminal device is the terminal device in the range of the location #1, it is determined that the blockchain that can be accessed by the terminal device is the blockchain #1, and the blockchain #1 may authenticate the terminal device in the authentication manner #1.

It should be understood that Example 1 is intended to facilitate understanding of a procedure of determining the blockchain that can be accessed by the terminal device, and does not constitute any limitation on the protection scope of this application. Another method for determining, based on the subscription data and/or the network policy information, the blockchain that can be accessed by the terminal device also falls within the protection scope of this application. For example, when the subscription data includes the identifier of the transaction, the identifier of the block, the block height, or the identifier of the account, the policy information may also be refined to include a granularity such as a transaction or a block (for example, the policy information indicates a transaction or a block that can be accessed by the terminal device in the range of the location #1).

Specifically, after receiving the query message, the UDM may return a notification message to the LAF, where the notification message is used to return information queried by the LAF. The method procedure shown in FIG. 2A and FIG. 2B further includes the following step:
S232: The LAF receives the notification message from the UDM, or the UDM sends the notification message to the LAF.

The notification message includes the subscription data of the terminal device and/or the policy information.

In a possible implementation, when the query request is used to request to query the subscription data of the terminal device, the notification message includes the subscription data of the terminal device. For example, the notification message includes information about a blockchain that can be accessed when the terminal device subscribes, and an authentication manner corresponding to the blockchain that can be accessed.

In another possible implementation, when the query request is used to request to query the policy information, the notification message includes the network policy information.

In still another possible implementation, when the query request is used to request to query the subscription data of the terminal device and the policy information, the notification message includes the subscription data of the terminal device and the network policy information.

Specifically, the subscription data of the terminal device and/or the network policy information are/is used to determine whether the terminal device can access the first blockchain. Optionally, when the terminal device can access the first blockchain, an authentication manner used by the first blockchain to authenticate the terminal device may be further determined.

Further, the LAF may determine, based on information included in the received notification message, whether to perform EAP. The method procedure shown in FIG. 2A and FIG. 2B further includes the following step:
S240: The LAF determines whether to perform EAP.

Specifically, a second network element determines, based on the information included in the received notification message, whether to perform EAP. For example, if the second network element determines, based on the subscription data of the terminal device, that the terminal device can access the first blockchain, the second network element determines to perform EAP on the terminal device. For another example, if the LAF determines, based on the subscription data of the terminal device, that the terminal device cannot access the first blockchain, the LAF determines not to perform EAP on the terminal device.

S250: The LAF sends a first authentication response message to the AMF, or the AMF receives a first authentication response message from the LAF.

The first authentication response message includes information indicating whether to perform authentication (for example, execute an EAP procedure). Specifically, the first authentication response message further includes the identifier of the terminal device and the information about the first blockchain. For ease of description, the following uses an example in which an authentication procedure is the EAP procedure for description. It should be noted that, when it is determined that the terminal device needs to be authenticated, authentication may be further performed based on a related authentication manner recorded in a current blockchain technology. A manner in which the terminal device is authenticated by the blockchain is not limited in this embodiment of this application.

Optionally, when the first authentication request message includes the session identifier, the first authentication response message further includes the session identifier.

In this embodiment of this application, a case in which EAP is performed is mainly considered. After receiving the first authentication response message, the AMF determines that EAP needs to be performed on the terminal device to authenticate the terminal device. Specifically, EAP is performed in the following two manners:
Authentication manner 1: The first blockchain authenticates the terminal device, and the terminal device, the AMF, and the first blockchain form a client (client), an authenticator (authenticator), and a server (server) in the EAP protocol. The LAF may be used as a unified egress agent of the first blockchain, to forward a message between the first blockchain and the terminal device, and a message between the first blockchain and the AMF.

In Manner 1, EAP is performed in the following steps.

S260: The AMF sends an EAP authentication request message to the terminal device, or the terminal device receives an EAP authentication request message from the AMF.

Specifically, based on the EAP protocol, the AMF sends the EAP authentication request message to the terminal device. The EAP authentication request message is used to trigger authentication on the terminal device, the EAP authentication request message includes the information about the first blockchain, and a message type of the EAP authentication request message is an EAP ID request.

S270: The terminal device sends an EAP authentication response message to the AMF, or the AMF receives an EAP authentication response message from the terminal device.

Specifically, based on the EAP protocol, the terminal device sends the EAP authentication response message to the AMF. The EAP authentication response message includes the information about the blockchain, and a message type of the EAP authentication response message is an EAP ID response.

S280: The AMF sends an EAP authentication message to the LAF, or the LAF receives an EAP authentication message from the AMF.

Specifically, based on the EAP protocol, the AMF sends the EAP authentication message to the LAF. The EAP authentication message includes the identifier of the terminal device and the information about the first blockchain. The identifier of the terminal device may be an identifier of the terminal device on the first blockchain.

The EAP authentication message indicates the first blockchain to authenticate the terminal device, and a message type of the EAP authentication message is an EAP msg.

S290: The LAF sends the EAP authentication message to the first blockchain, or the first blockchain receives the EAP authentication message from the LAF.

It should be noted that, in this embodiment of this application, steps performed by the blockchain may be understood as being performed by a node on the blockchain. For example, that the first blockchain receives the EAP authentication message from the LAF may be that the node on the first blockchain receives the EAP authentication message from the LAF. Steps performed by the blockchain below may be similarly understood as being performed by the node on the blockchain, and details are not described.

Specifically, the LAF identifies the first blockchain based on the information about the first blockchain that is carried in the EAP authentication message, and forwards the EAP authentication message to the first blockchain.

After receiving the EAP authentication message, the first blockchain authenticates the terminal device. The method procedure shown in FIG. 2A and FIG. 2B in Manner 1 further includes the following steps.

S2100: The first blockchain sends a first authentication message to the terminal device, or the terminal device receives a first authentication message from the first blockchain.

The first authentication message is used to authenticate the terminal device.

S2110: The terminal device sends a second authentication message to the first blockchain, or the terminal device receives a second authentication message from the first blockchain.

Specifically, in steps S2100 and S2110, the first blockchain and the terminal device perform authentication message exchange based on an authentication manner corresponding to the first blockchain.

It should be understood that the first authentication message and the second authentication message are forwarded by the first network element and the second network element.

After the authentication is completed, the first blockchain sends an authentication success/failure message to the terminal device. The method procedure shown in FIG. 2A and FIG. 2B further includes the following step:
S2120: The first blockchain sends authentication indication information to the terminal device, or the terminal device receives authentication indication information from the first blockchain.

The authentication indication information indicates whether the terminal device is successfully authenticated.

Authentication manner 2: The LAF authenticates the terminal device, and the terminal device, the AMF, and the LAF form a client, an authenticator, and a server in the EAP protocol.

In Manner 2, EAP is performed in the following steps:
S261: The AMF sends an EAP authentication request message to the terminal device, or the terminal device receives an EAP authentication request message from the first network element.
S271: The terminal device sends an EAP authentication response message to the AMF, or the AMF receives an EAP authentication response message from the terminal device.
S281: The AMF sends an EAP authentication message to the LAF, or the LAF receives an EAP authentication message from the AMF.

For steps S261 to S281, refer to the descriptions of steps S260 to S280. Details are not described herein again.

Different from Manner 1, in Manner 2, the LAF performs authentication. Therefore, after receiving the EAP authentication message, the LAF does not need to forward the EAP authentication message to the first blockchain, but authenticates the terminal device. The method procedure shown in FIG. 2A and FIG. 2B in Manner 2 further includes the following steps.

S291: The LAF sends a first authentication message to the terminal device, or the terminal device receives a first authentication message from the LAF.

The first authentication message is used to authenticate the terminal device.

S2111: The terminal device sends a second authentication message to the LAF, or the terminal device receives a second authentication message from the LAF.

Specifically, in steps S291 and S2111, the LAF and the terminal device perform authentication message exchange based on an authentication manner corresponding to the first blockchain.

It should be understood that the first authentication message and the second authentication message may be forwarded by the AMF.

After the authentication is completed, the LAF sends an authentication success/failure message to the terminal device. The method procedure shown in FIG. 2A and FIG. 2B further includes the following step:
S2112: The LAF sends authentication indication information to the terminal device, or the terminal device receives authentication indication information from the LAF.

The authentication indication information indicates whether the terminal device is successfully authenticated.

Further, when the authentication indication information indicates that the terminal device is successfully authenticated, the terminal device may access data on the first blockchain. The method procedure shown in FIG. 2A and FIG. 2B further includes the following step:
S201: The terminal device sends a data access request to the first blockchain, or the first blockchain receives a data access request from the terminal device.

In a possible implementation, the data access request is used to request to obtain the first data on the first blockchain.

In another possible implementation, the data access request is used to request to send the second data to the first blockchain.

Specifically, the data access request is forwarded to the first blockchain by the LAF and the AMF.

Corresponding to Manner 1: After receiving the data access request, the first blockchain determines whether the terminal device has permission to access the first blockchain. The method procedure shown in FIG. 2A and FIG. 2B further includes the following step:
S202: The first blockchain determines whether the terminal device has permission.

Corresponding to Manner 2: After receiving the data access request, the LAF determines whether the terminal device has permission to access the first blockchain. The method procedure shown in FIG. 2A and FIG. 2B further includes the following step:
S203: The LAF determines whether the terminal device has permission.

When the terminal device has permission to access the first blockchain, the LAF forwards the data access request to the first blockchain.

S204: The terminal device performs data transmission with the first blockchain.

Specifically, that the terminal device performs data transmission with the first blockchain includes:
The terminal device receives the first data from the first blockchain; and/or the terminal device sends the second data to the first blockchain. That the terminal device sends the second data to the first blockchain may be understood as that the terminal device "writes" the second data to the first blockchain, or may be understood as that the terminal device invokes the smart contract on the first blockchain.

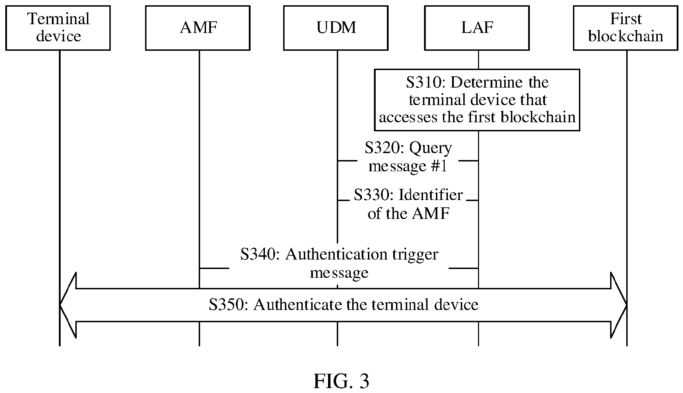

With reference to FIG. 2A and FIG. 2B, the foregoing describes a procedure in which the terminal device actively initiates access to the first blockchain and the first blockchain authenticates the terminal device. For example, the LAF may determine, based on a service requirement of a blockchain, a terminal device that needs to access the blockchain, and initiate authentication to the terminal device. For ease of understanding of this solution, the following provides description with reference to FIG. 3. FIG. 3 is a schematic flowchart of another communication method according to an embodiment of this application. The method includes the following step:
S310: An LAF determines a terminal device that accesses a first blockchain.

Specifically, the LAF may determine, based on a service requirement of a blockchain, a terminal device that needs to access the blockchain. For example, if the first blockchain is a blockchain that stores related data in internet of vehicles, the LAF may determine, based on a service requirement (for example, data of a vehicle in internet of vehicles) of the first blockchain, that a terminal device accessing the blockchain is a vehicle in a specific area.

After determining the terminal device that needs to access the blockchain, the LAF may determine an AMF in which the terminal device is located. The method procedure shown in FIG. 3 further includes the following steps.

S320: The LAF sends a query message #1 to a UDM, or a UDM receives a query message #1 from the LAF.

The query message #1 is used to query the AMF in which the terminal device is located.

S330: The UDM sends an identifier of the AMF to the LAF, or the LAF receives an identifier of the AMF from the UDM.

After determining the AMF in which the terminal device is located, the LAF sends an authentication trigger message to the AMF. The method procedure shown in FIG. 3 further includes the following steps.

S340: The LAF sends the authentication trigger message to the AMF, or the AMF receives the authentication trigger message from the LAF.

The AMF may initiate a terminal device authentication procedure after receiving the authentication trigger message. The method procedure shown in FIG. 3 further includes the following step:
S350: Authenticate the terminal device.

For a specific authentication manner, refer to Authentication manner 1 and Authentication manner 2 shown in FIG. 2A and FIG. 2B. Details are not described herein again. For a blockchain access procedure after authentication, refer to the procedure in which the terminal device accesses the first blockchain in FIG. 2A and FIG. 2B. Details are not described herein again.

Optionally, after authenticating a plurality of terminal devices to determine that the terminal device has permission to access the first blockchain, the first blockchain may further revoke authorization for the terminal device, that is, revoke permission for the terminal device to access the first blockchain. For example, the first blockchain may allow access of a terminal device in a first area range, and when the terminal device moves out of the area range, may revoke authorization for the terminal device.

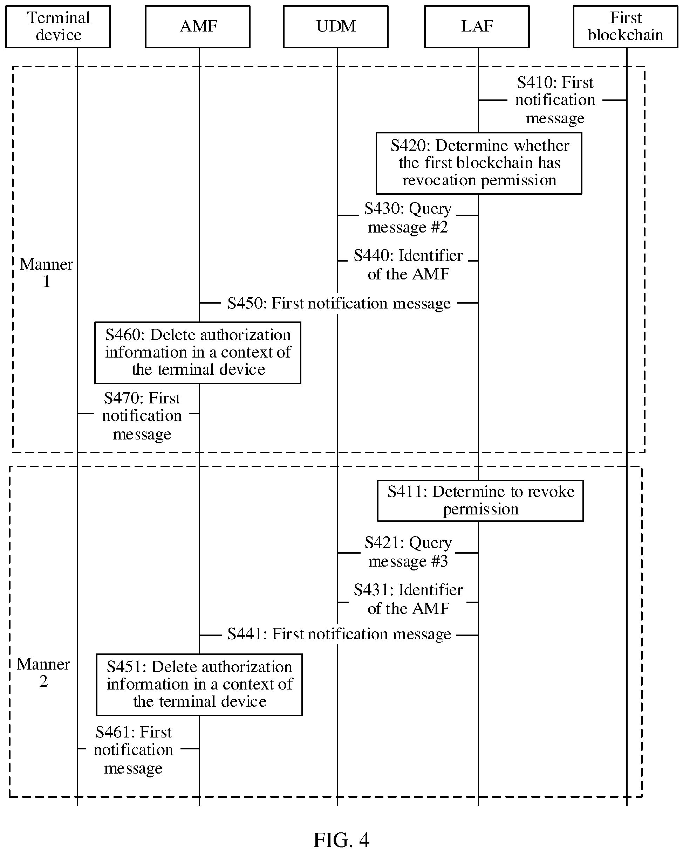

The following describes, with reference to FIG. 4, how to revoke permission for a terminal device to access a first blockchain. FIG. 4 is a schematic flowchart of still another communication method according to an embodiment of this application.

Specifically, there are the following two manners of revoking the permission for the terminal device to access the first blockchain:
Manner 1: The first blockchain revokes the permission for the terminal device to access the first blockchain. In Manner 1, the method procedure shown in FIG. 3 includes the following step:
S410: The first blockchain sends a first notification message to an LAF, or an LAF receives a first notification message from the first blockchain.

The first notification message indicates to revoke the permission for the terminal device to access the first blockchain. Specifically, the first notification message includes information about the first blockchain (for example, an identifier of the first blockchain, or an identifier of a blockchain group to which the first blockchain belongs) and information about the terminal device (for example, an identifier ID of the terminal device, or an identifier of the terminal device on the first blockchain).

After receiving the first notification message, the LAF may determine whether the first blockchain has revocation permission to revoke access of the terminal device to the first blockchain. The method procedure shown in FIG. 4 further includes the following step:
S420: The LAF determines whether the first blockchain has the revocation permission.

For example, the LAF determines, based on a profile (profile) of the first blockchain, whether the first blockchain has the revocation permission. In this embodiment, a case in which the first blockchain has the revocation permission to revoke access of the terminal device to the first blockchain is mainly considered. The profile of the first blockchain includes information indicating whether the first blockchain has the revocation permission.

For example, when the information about the terminal device that is included in the first notification message is the identifier of the terminal device on the first blockchain, the LAF may query a correspondence between the identifier of the terminal device on the first blockchain and the identifier of the terminal device locally or from a UDM, and determine the identifier of the terminal device based on the correspondence and the identifier of the terminal device on the first blockchain. The correspondence may be predefined, or may be obtained through negotiation. This is not limited in this application.

When the LAF determines that the first blockchain has the revocation permission, the method procedure shown in FIG. 4 further includes the following steps.

S430: The LAF sends a query message #2 to the UDM, or the UDM receives a query message #2 from the LAF.

The query message #2 is used to query an AMF in which the terminal device is located.

S440: The UDM sends an identifier of the AMF to the LAF, or the LAF receives an identifier of the AMF from the UDM.

S450: The LAF sends the first notification message to the AMF, or the AMF receives the first notification message from the LAF.

The first notification message indicates to revoke the permission for the terminal device to access the first blockchain. Specifically, the first notification message includes the information about the first blockchain (for example, the identifier of the first blockchain, or the identifier of the blockchain group to which the first blockchain belongs) and the information about the terminal device (for example, the identifier ID of the terminal device).

S460: The AMF deletes authorization information in a context of the terminal device.

After receiving the first notification message, the AMF learns that the permission for the terminal device to access the first blockchain is revoked. In this case, the AMF may delete, from the context of the terminal device, information indicating that the terminal device has the permission to access the first blockchain.

S470: The AMF sends the first notification message to the terminal device, or the terminal device receives the first notification message from the AMF.

After receiving the first notification message, the terminal device updates local configuration information, for example, determines that the terminal device does not have the permission to access the first blockchain.

Manner 2: An LAF revokes the permission for the terminal device to access the first blockchain. In Manner 2, the method procedure shown in FIG. 4 includes the following steps.

S411: The LAF determines to revoke the permission.

The LAF may determine, based on a status of the first blockchain and/or the terminal device, to revoke the permission for the terminal device to access the first blockchain.

S421: The LAF sends a query message #3 to the UDM, or the UDM receives a query message #3 from the LAF.

The query message is used to query an AMF in which the terminal device is located.

S431: A UDM sends an identifier of the AMF to the LAF, or the LAF receives an identifier of the AMF from a UDM.

S441: The LAF sends a first notification message to the AMF, or the AMF receives a first notification message from the LAF.

S451: The AMF deletes authorization information in a context of the terminal device.

S461: The AMF sends the first notification message to the terminal device, or the terminal device receives the first notification message from the AMF.

For steps S441 to S461, refer to descriptions of steps S450 to S470. Details are not described herein again.

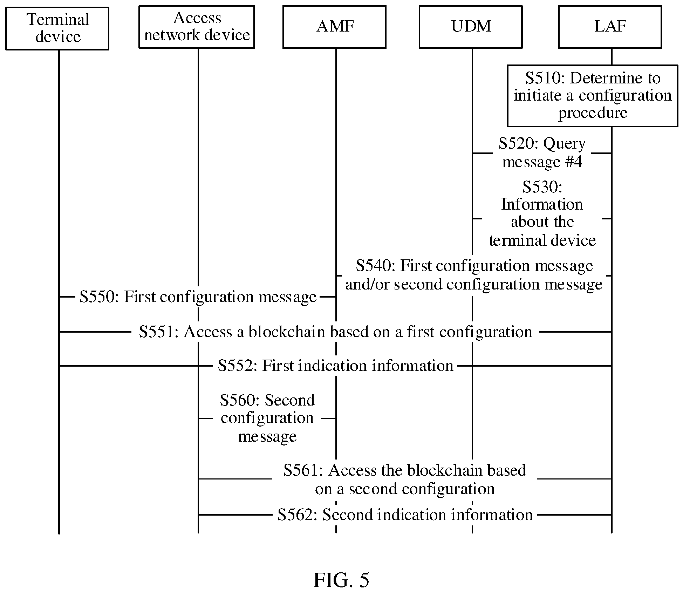

With reference to FIG. 2A and FIG. 2B to FIG. 4, the foregoing mainly describes how to authenticate whether the terminal device can access the first blockchain and revoke the permission for the terminal device to access the first blockchain. For example, the terminal device and/or an access network device may be further configured to access the first blockchain, so that data of the terminal device and/or the access network device is on-chained or obtained from the first blockchain. The following describes a configuration procedure with reference to FIG. 5. FIG. 5 is a schematic flowchart of still another communication method according to an embodiment of this application. The method includes the following steps.

S510: An LAF determines to initiate a configuration procedure.

For example, after receiving a configuration activation instruction delivered by a network element that has a security or management function, such as a network management device (Conet Management) and/or a security management function network element (security management function, SEMF), the LAF generates a first configuration message to activate a configuration procedure of a terminal device, and/or generates a second configuration message to activate a configuration procedure of an access network device.

S520: The LAF sends a query message #4 to a UDM, or a UDM receives a query message #4 from the LAF.

The query message #3 is used to obtain information related to the terminal device that needs to be configured, including but not limited to:
an identifier of a terminal device in a specific physical area, an identifier of a terminal device having a service, an identifier of a terminal device meeting a specific capability condition, information about an AMF in which the terminal device is located, and the like.

For example, the LAF determines, based on local policy information (for example, the policy information is that a blockchain needs to obtain information about the terminal device in the specific physical area), that the terminal device in the specific physical area needs to be configured.

Specifically, the LAF may query, from the UDM, whether subscription data of the terminal device supports configuration. When the subscription data of the terminal device is not found, the configuration procedure may be ended.

S530: The UDM sends the information about the terminal device to the LAF, or the LAF receives the information about the terminal device from the UDM.

S540: The LAP sends the first configuration message and/or the second configuration message to the AMF.

The first configuration message includes at least one of the following information: an identifier corresponding to a first configuration, an identifier of a blockchain corresponding to the first configuration, an identifier of the terminal device, an address of the blockchain corresponding to the first configuration, a format of third data, or a type of the third data; and the first configuration includes: configuring the terminal device to send the third data to the blockchain, or configuring the terminal device to receive the third data sent by the blockchain.

For example, the first configuration message includes: the ID of the first configuration, identifying a current configuration; a message type: configuration activation; a configured blockchain: a BC ID; a device that accepts the configuration: the identifier of the terminal device, for example, the identifier of the terminal device on the blockchain; an address of the blockchain: a chain IP; a transaction format; cryptography-related information, for example, encryption, hash, and a signature algorithm; a reporting type, for example, reporting based on a timer or a counter, reporting based on a periodicity, or reporting based on a trigger; and a reporting manner, for example, directly releasing a transaction (writing) or invoking a smart contract. The first configuration message further includes transmitted data content, for example, surveying and mapping data (such as temperature, humidity, atmospheric pressure, and location information); service-related data (such as a road condition, in-vehicle information, traffic information, and a road condition); device information (such as a computing capability and a security capability of the terminal device); security information (such as trusted computing remote attestation information and a remote attestation result); and network KPI information (such as cell load, spectrum usage, and key behavior of the terminal device).

The second configuration message includes at least one of the following information: an identifier corresponding to a second configuration, an identifier of a blockchain corresponding to the second configuration, an identifier of the access network device, an address of the blockchain corresponding to the second configuration, a format of fourth data, or a type of the fourth data; and the second configuration includes: configuring the access network device to send the fourth data to the blockchain, or configuring the access network device to receive the fourth data sent by the blockchain.

For example, the second configuration message includes: the ID of the second configuration, identifying a current configuration; a message type: configuration activation; a configured blockchain: a BC ID; a device that accepts the configuration: the identifier of the access network device, for example, the identifier of the access network device on the blockchain; an address of the blockchain: a chain IP; a transaction format; cryptography-related information, for example, encryption, hash, and a signature algorithm; a reporting type, for example, reporting based on a timer or a counter, reporting based on a periodicity, or reporting based on a trigger; and a reporting manner, for example, directly releasing a transaction (writing) or invoking a smart contract. The second configuration message further includes transmitted data content, for example, surveying and mapping data (such as temperature, humidity, atmospheric pressure, and location information); service-related data (such as a road condition, in-vehicle information, traffic information, and a road condition); device information (such as a computing capability and a security capability of the access network device); security information (such as trusted computing remote attestation information and a remote attestation result); and network KPI information (such as cell load, spectrum usage, and key behavior of the access network device).

S550: The AMF sends the first configuration message to the terminal device through the access network device.

The terminal device receives and stores the first configuration message, and returns a configuration success or failure response to the AMF.

For example, in this embodiment, the LAF may store the first configuration message in the LAF or send the first configuration message to the UDM for storage.

For example, after the foregoing configuration is completed, the terminal device may access the blockchain based on the first configuration. The method procedure shown in FIG. 5 further includes the following step:
S551: The terminal device accesses the blockchain based on the first configuration.

In a possible implementation, that the terminal device accesses the blockchain based on the first configuration includes: The terminal device generates a first transaction based on the first configuration and the third data, and the terminal device sends the first transaction. That the terminal device sends the first transaction may be directly releasing the first transaction, or may be invoking the smart contract.

Specifically, that the terminal device sends the first transaction includes: The terminal device sends the first transaction to the LAF through the access network device and the AMF; or the terminal device sends the first transaction to the LAF through the access network device and a UPF.

In another possible implementation, that the terminal device accesses the blockchain based on the first configuration includes: The terminal device receives data from the blockchain based on the first configuration.

Further, after the configuration is completed, first indication information may indicate that the first configuration changes.

For example, the LAF or the terminal device may indicate any one of the following by using the first indication information: indicating to update the first configuration, indicating to suspend the first configuration, indicating to cancel the first configuration, or indicating to resume the first configuration. The method procedure shown in FIG. 5 may further include the following step:
S552: The LAF sends the first indication information to the terminal device, or the terminal device sends the first indication information to the LAF.

It should be noted that information transmission between the LAF and the terminal device is implemented through forwarding by the access network device and the AMF.

In a possible implementation, the first indication information indicates to update the first configuration, and the first indication information includes at least one of the following information:
the ID of the first configuration, indicating an updated configuration; an information type: configuration update; a configured blockchain: a BC ID; a device that accepts the configuration: the identifier of the terminal device, for example, the identifier of the terminal device on the blockchain; an address of the blockchain: a chain IP; a transaction format; cryptography-related information, for example, encryption, hash, and a signature algorithm; a reporting type, for example, reporting based on a timer or a counter, reporting based on a periodicity, or reporting based on a trigger; and a reporting manner, for example, directly releasing a transaction (writing) or invoking a smart contract. The first indication information further includes transmitted data content and the like.

It may be understood that updating the first configuration is similar to configuring the first configuration, and a difference lies in that updating is reconfiguring an existing configuration.

In another possible implementation, the first indication information indicates to suspend the first configuration, and the first indication information includes at least one of the following information:
the ID of the first configuration, indicating an updated configuration; an information type: configuration suspension; a configured blockchain: a BC ID; a device that accepts the configuration: the identifier of the terminal device, for example, the identifier of the terminal device on the blockchain.

In still another possible implementation, the first indication information indicates to cancel the first configuration, and the first indication information includes at least one of the following information:
the ID of the first configuration, indicating an updated configuration; an information type: configuration cancellation; a configured blockchain: a BC ID; a device that accepts the configuration: the identifier of the terminal device, for example, the identifier of the terminal device on the blockchain.

In yet another possible implementation, the first indication information indicates to resume the first configuration, and the first indication information includes at least one of the following information:
the ID of the first configuration, indicating an updated configuration; an information type: configuration resumption; a configured blockchain: a BC ID; a device that accepts the configuration: the identifier of the terminal device, for example, the identifier of the terminal device on the blockchain.

In steps S550 to S552, the terminal device is configured and the terminal device accesses the blockchain based on the first configuration. Similarly, the access network device may be further configured. The following provides description with reference to steps S560 to S562.

S560: The AMF sends the second configuration message to the access network device.

The access network device receives and stores the second configuration message, and returns a configuration success or failure response to the AMF.

For example, in this embodiment, the LAF may store the second configuration message in the LAF or send the second configuration message to the UDM for storage.

For example, after the second configuration is completed, the access network device may access the blockchain based on the second configuration. The method procedure shown in FIG. 5 further includes the following step:
S561: The access network device accesses the blockchain based on the second configuration.

In a possible implementation, that the access network device accesses the blockchain based on the second configuration includes: The access network device generates a second transaction based on the second configuration and the fourth data, and the access network device sends the second transaction.

Specifically, that the access network device sends the second transaction includes: The access network device sends the second transaction to the LAF through the AMF; or the access network device sends the second transaction to the LAF through the UPF. That the access network device sends the second transaction may be directly releasing the first transaction, or may be invoking the smart contract.

In another possible implementation, that the access network device accesses the blockchain based on the second configuration includes: The access network device receives data from the blockchain based on the first configuration.

Further, the LAF identifies or verifies a message type, identifies a blockchain corresponding to a transaction, and releases the transaction to a node on the corresponding blockchain. The corresponding blockchain node writes the transaction to the chain by using a consensus mechanism.

Further, after the configuration is completed, indication information may indicate that the configuration changes.

For example, the LAF or the access network device may indicate any one of the following by using the second indication information: indicating to update the second configuration, indicating to suspend the second configuration, indicating to cancel the second configuration, or indicating to resume the second configuration. The method procedure shown in FIG. 5 may further include the following step:
S562: The LAF sends the second indication information to the access network device, or the access network device sends the second indication information to the LAF.

It should be noted that information transmission between the LAF and the access network device is implemented through forwarding by the AMF.

In a possible implementation, the second indication information indicates to update the second configuration, and the second indication information includes at least one of the following information:
the ID of the second configuration, indicating an updated configuration; an information type: configuration update; a configured blockchain: a BC ID; a device that accepts the configuration: the identifier of the access network device, for example, the identifier of the access network device on the blockchain; an address of the blockchain: a chain IP; a transaction format; cryptography-related information, for example, encryption, hash, and a signature algorithm; a reporting type, for example, reporting based on a timer or a counter, reporting based on a periodicity, or reporting based on a trigger; and a reporting manner, for example, directly releasing a transaction (writing) or invoking a smart contract. The second indication information further includes transmitted data content and the like.

It may be understood that updating the second configuration is similar to configuring the second configuration, and a difference lies in that updating is reconfiguring an existing configuration.

In another possible implementation, the second indication information indicates to suspend the second configuration, and the second indication information includes at least one of the following information:
the ID of the second configuration, indicating an updated configuration; an information type: configuration suspension; a configured blockchain: a BC ID; a device that accepts the configuration: the identifier of the access network device, for example, the identifier of the access network device on the blockchain.

In still another possible implementation, the second indication information indicates to cancel the second configuration, and the second indication information includes at least one of the following information:
the ID of the second configuration, indicating an updated configuration; an information type: configuration cancellation; a configured blockchain: a BC ID; a device that accepts the configuration: the identifier of the access network device, for example, the identifier of the access network device on the blockchain.

In yet another possible implementation, the second indication information indicates to resume the second configuration, and the second indication information includes at least one of the following information:
the ID of the second configuration, indicating an updated configuration; an information type: configuration resumption; a configured blockchain: a BC ID; a device that accepts the configuration: the identifier of the access network device, for example, the identifier of the access network device on the blockchain.

It should be understood that sequence numbers of the foregoing processes do not mean execution sequences. The execution sequences of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

For example, the configuration procedure shown in FIG. 5 may be combined with the authentication procedure shown in FIG. 2A and FIG. 2B (or FIG. 3), so that the blockchain is accessed based on the configuration after the authentication, thereby improving security assurance.

It should be further understood that, in some of the foregoing embodiments, a device (such as a core network device, an access network device, or a terminal device) in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by the device (such as the core network device, the access network device, or the terminal device) may also be implemented by a component (such as a chip or a circuit) of the device.

The foregoing describes in detail the communication method provided in the embodiments of this application with reference to FIG. 2A and FIG. 2B to FIG. 5. The foregoing communication method is mainly described from a perspective of interaction between network elements. It may be understood that, to implement the foregoing functions, each network element includes a corresponding hardware structure and/or software module for performing each function.

A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that this implementation goes beyond the scope of this application.

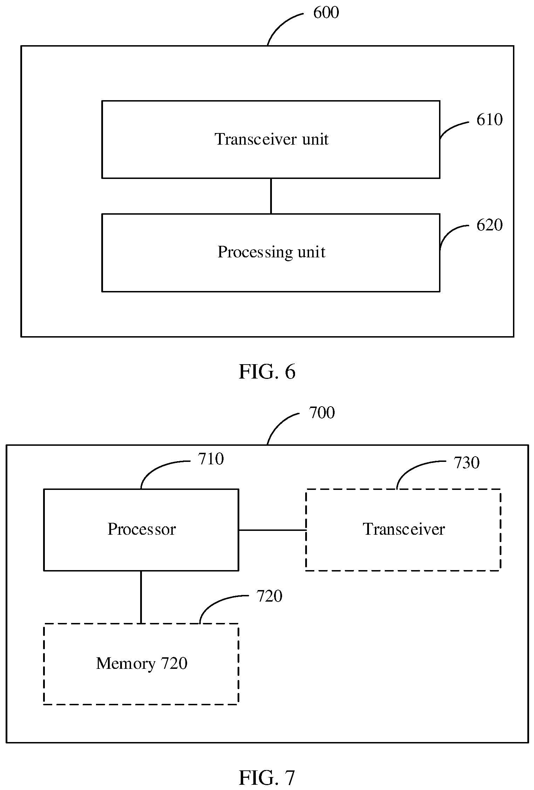

The following describes in detail a communication apparatus according to an embodiment of this application with reference to FIG. 6 and FIG. 7. It should be understood that descriptions of apparatus embodiments correspond to the descriptions of the method embodiments. Therefore, for content that is not described in detail, refer to the foregoing method embodiments. For brevity, some content is not described again.

In embodiments of this application, a transmit end device or a receive end device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used. An example in which each functional module is obtained through division based on each corresponding function is used below for description.

FIG. 6 is a block diagram of a communication apparatus 600 according to an embodiment of this application. The apparatus 600 includes a transceiver unit 610 and a processing unit 620. The transceiver unit 610 may implement a corresponding communication function, and the processing unit 620 is configured to perform data processing. The transceiver unit 610 may also be referred to as a communication interface or a communication unit. When implementing an information obtaining function, the transceiver unit 610 may also be referred to as an obtaining unit.

Optionally, the apparatus 600 may further include a storage unit. The storage unit may be configured to store instructions and/or data. The processing unit 620 may read the instructions and/or the data in the storage unit, so that the apparatus implements the foregoing method embodiment.

The apparatus 600 may be configured to perform actions performed by the device (such as the core network device, the access network device, the terminal device, or the blockchain) in the foregoing method embodiments. In this case, the apparatus 600 may be a device or a component (such as a chip or a circuit) that can be configured in the device. The transceiver unit 610 is configured to perform receiving and sending related operations of the device in the foregoing method embodiment. The processing unit 620 is configured to perform a processing related operation of the device in the foregoing method embodiments.

In a design, the apparatus 600 is configured to perform actions performed by the terminal device in the foregoing method embodiments.

The processing unit 620 is configured to generate a first request, where the first request is used to request to access a first blockchain, and the first request includes information about the first blockchain.

The transceiver unit 610 is configured to send the first request to a first network element.

Optionally, the transceiver unit 610 is further configured to receive a first message, where the first message includes at least one of the following information: information indicating a transaction set accessed by the terminal device, information indicating a block set accessed by the terminal device, or information indicating an account set accessed by the terminal device.

Optionally, the transceiver unit 610 is further configured to receive the first message, where the first message includes information indicating a blockchain set accessed by the terminal, and the first blockchain belongs to the blockchain set.

Optionally, the transceiver unit 610 is further configured to receive a first authentication message from the first network element or the first blockchain, where the first authentication message is used to authenticate the terminal device; the transceiver unit 610 is further configured to send a second authentication message in response to the first authentication message to the first network element or the first blockchain; and the transceiver unit 610 is further configured to receive authentication indication information from the first network element or the first blockchain, where the authentication indication information indicates whether the terminal device is successfully authenticated.

Optionally, the transceiver unit 610 is further configured to send a data access request to the first blockchain, where the data access request is used to request to obtain first data on the first blockchain; and the transceiver unit 610 is further configured to receive the first data from the first blockchain; or the transceiver unit 610 is further configured to send a data access request to the first blockchain, where the data access request is used to request to send second data to the first blockchain, and the data access request includes the second data.

Optionally, the transceiver unit 610 is further configured to receive a first notification message from the first network element, where the first notification message indicates to revoke permission for the terminal device to access the first blockchain.

Optionally, the transceiver unit 610 is further configured to receive a first configuration message from the first network element, where the first configuration message includes at least one of the following information: an identifier corresponding to a first configuration, an identifier of a blockchain corresponding to the first configuration, an identifier of the terminal device, an address of the blockchain corresponding to the first configuration, a format of third data, or a type of the third data; and the first configuration includes: configuring the terminal device to send the third data to the blockchain, or configuring the terminal device to receive the third data sent by the blockchain.

Optionally, the transceiver unit 610 is further configured to receive first indication information from the first network element; or the transceiver unit 610 is further configured to send the first indication information to the first network element, where the first indication information indicates any one of the following: indicating to update the first configuration, indicating to cancel the first configuration, indicating to suspend the first configuration, or indicating to resume the first configuration.

Optionally, the processing unit 620 is further configured to generate a first transaction based on the first configuration and the third data; and the transceiver unit 610 is further configured to send the first transaction, where the authentication indication information indicates whether the terminal device is successfully authenticated; or the terminal device receives the third data from the first blockchain.

The apparatus 600 may implement the steps or procedures performed by the terminal device in the method embodiments according to embodiments of this application. The apparatus 600 may include units configured to perform the methods performed by the terminal device in the method embodiments. In addition, the units in the apparatus 600 and the foregoing other operations and/or functions are respectively used to implement corresponding procedures of the terminal device in the method embodiments.

When the apparatus 600 is configured to perform the method in FIG. 2A and FIG. 2B, the transceiver unit 610 may be configured to perform receiving and sending steps in the method, for example, steps S220, S260, S270, S2100, S2110, S2120, S261, S271, S291, S2111, S2112, S201, and S205, and the processing unit 620 may be configured to perform processing steps in the method, for example, steps S211, S212, and S210.

When the apparatus 600 is configured to perform the method in FIG. 3, the transceiver unit 610 may be configured to perform receiving and sending steps in the method, for example, step S350, and the processing unit 620 may be configured to perform a processing step in the method.

When the apparatus 600 is configured to perform the method in FIG. 4, the transceiver unit 610 may be configured to perform receiving and sending steps in the method, for example, steps S470 and S461, and the processing unit 620 may be configured to perform a processing step in the method.

When the apparatus 600 is configured to perform the method in FIG. 5, the transceiver unit 610 may be configured to perform receiving and sending steps in the method, for example, steps S550, S551, and S552, and the processing unit 620 may be configured to perform a processing step in the method.

It should be understood that a specific process in which the units perform the foregoing corresponding steps is described in detail in the foregoing method embodiments. For brevity, details are not described herein again.

In another design, the apparatus 900 is configured to perform actions performed by the first network element (for example, the LAF) in the foregoing method embodiments.

The transceiver unit 610 is configured to receive a first request from a terminal device, where the first request is used to request to access a first blockchain, and the first request includes information about the first blockchain; and the processing unit 620 is configured to determine, based on the first request, that the terminal device requests to access the first blockchain.

Optionally, the transceiver unit 610 is configured to send a query message to a unified data management network element, where the query message is used to query subscription data of the terminal device and/or policy information; and the transceiver unit 610 is configured to receive the subscription data of the terminal device and/or the policy information from the unified data management network element, where the subscription data of the terminal device and/or the policy information include/includes information indicating a blockchain set that the terminal device has permission to access.

Optionally, the transceiver unit 610 is configured to send a first authentication message to the terminal device, where the first authentication message is used to authenticate the terminal device. Optionally, the transceiver unit 610 is configured to receive a second authentication message in response to the first authentication message from the terminal device; and the first network element sends authentication indication information to the terminal device, where the authentication indication information indicates whether the terminal device is successfully authenticated.

Optionally, the transceiver unit 610 is configured to send a first notification message to the terminal device, where the first notification message indicates to revoke permission for the terminal device to access the first blockchain.

Optionally, the transceiver unit 610 is configured to receive the first notification message from the first blockchain, where the first notification message indicates to revoke the permission for the terminal device to access the first blockchain; and the processing unit 620 is configured to determine that the first blockchain has permission to revoke access of the terminal device to the first blockchain.

Optionally, the transceiver unit 610 is configured to send a first configuration message to the terminal device, where the first configuration message includes at least one of the following information: an identifier corresponding to a first configuration, an identifier of a blockchain corresponding to the first configuration, an identifier of the terminal device, an address of the blockchain corresponding to the first configuration, a format of third data, or a type of the third data; and the first configuration includes: configuring the terminal device to send the third data to the blockchain, or configuring the terminal device to receive the third data sent by the blockchain.

Optionally, the transceiver unit 610 is configured to send first indication information to the terminal device; or the transceiver unit 610 is configured to receive the first indication information from the terminal device, where the first indication information indicates any one of the following: indicating to update the first configuration, indicating to suspend the first configuration, indicating to cancel the first configuration, or indicating to resume the first configuration.

Optionally, the transceiver unit 610 is configured to send a second configuration message to an access network device, where the second configuration message includes at least one of the following information: an identifier corresponding to a second configuration, an identifier of a blockchain corresponding to the second configuration, an identifier of the access network device, an address of the blockchain corresponding to the second configuration, a format of fourth data, or a type of the fourth data, where the second configuration includes: configuring the access network device to send the fourth data to the blockchain, or configuring the access network device to receive the fourth data sent by the blockchain.

Optionally, the transceiver unit 610 is configured to send second indication information to the access network device; or the transceiver unit 610 is configured to receive the second indication information from the access network device, where the second indication information indicates any one of the following: indicating to update the second configuration, indicating to suspend the second configuration, indicating to cancel the second configuration, or indicating to resume the second configuration.

The apparatus 600 may implement the steps or procedures performed by the first network element in the method embodiments according to embodiments of this application. The apparatus 600 may include units configured to perform the methods performed by the first network element in the method embodiments. In addition, the units in the apparatus 600 and the foregoing other operations and/or functions are respectively used to implement corresponding procedures of the first network element in the method embodiments.

When the apparatus 600 is configured to perform the method in FIG. 2A and FIG. 2B, the transceiver unit 610 may be configured to perform receiving and sending steps in the method, for example, steps S230, S231, S232, S250, S280, S290, S281, S291, S2111, and S2112, and the processing unit 620 may be configured to perform processing steps in the method, for example, steps S203 and S240.

When the apparatus 600 is configured to perform the method in FIG. 3, the transceiver unit 610 may be configured to perform receiving and sending steps in the method, for example, steps S320 and S330, and the processing unit 620 may be configured to perform a processing step in the method, for example, step S310.

When the apparatus 600 is configured to perform the method in FIG. 4, the transceiver unit 610 may be configured to perform receiving and sending steps in the method, for example, steps S410, S430, S440, S450, S421, S431, and S441, and the processing unit 620 may be configured to perform processing steps in the method, for example, steps S420 and S411.

When the apparatus 600 is configured to perform the method in FIG. 5, the transceiver unit 610 may be configured to perform receiving and sending steps in the method, for example, steps S520, S530, S540, S551, S552, S561, and S562, and the processing unit 620 may be configured to perform a processing step in the method, for example, step S510.

It should be understood that a specific process in which the units perform the foregoing corresponding steps is described in detail in the foregoing method embodiments. For brevity, details are not described herein again.

In still another design, the apparatus 600 is configured to perform actions performed by the AMF in the foregoing method embodiments.

The apparatus 600 may implement the steps or procedures performed by the AMF in the method embodiments according to embodiments of this application. The apparatus 600 may include units configured to perform the methods performed by the AMF in the method embodiments. In addition, the units in the apparatus 600 and the foregoing other operations and/or functions are respectively used to implement corresponding procedures of the AMF in the method embodiments.

When the apparatus 600 is configured to perform the method in FIG. 2A and FIG. 2B, the transceiver unit 610 may be configured to perform receiving and sending steps in the method, for example, steps S220, S230, S250, S260, S270, S280, S261, S271, and S281, and the processing unit 620 may be configured to perform a processing step in the method, for example, step S221.

When the apparatus 600 is configured to perform the method in FIG. 3, the transceiver unit 610 may be configured to perform receiving and sending steps in the method, for example, step S340, and the processing unit 620 may be configured to perform a processing step in the method.

When the apparatus 600 is configured to perform the method in FIG. 4, the transceiver unit 610 may be configured to perform receiving and sending steps in the method, for example, steps S450, S470, S441, and S461, and the processing unit 620 may be configured to perform processing steps in the method, for example, steps S460 and S451.

When the apparatus 600 is configured to perform the method in FIG. 4, the transceiver unit 610 may be configured to perform receiving and sending steps in the method, for example, steps S540, S550, and S560, and the processing unit 620 may be configured to perform a processing step in the method.

It should be understood that a specific process in which the units perform the foregoing corresponding steps is described in detail in the foregoing method embodiments. For brevity, details are not described herein again.

In still another design, the apparatus 600 is configured to perform actions performed by the access network device in the foregoing method embodiments.

The apparatus 600 may implement the steps or procedures performed by the access network device in the method embodiments according to embodiments of this application. The apparatus 600 may include units configured to perform the methods performed by the access network device in the method embodiments. In addition, the units in the apparatus 600 and the foregoing other operations and/or functions are respectively used to implement corresponding procedures of the access network device in the method embodiments.

When the apparatus 600 is configured to perform the method in FIG. 4, the transceiver unit 610 may be configured to perform receiving and sending steps in the method, for example, steps S560, S561, and S562, and the processing unit 620 may be configured to perform a processing step in the method.

It should be understood that a specific process in which the units perform the foregoing corresponding steps is described in detail in the foregoing method embodiments. For brevity, details are not described herein again.

In still another design, the apparatus 600 is configured to perform actions performed by the blockchain in the foregoing method embodiments.

The apparatus 600 may implement the steps or procedures performed by the blockchain in the method embodiments according to embodiments of this application. The apparatus 600 may include units configured to perform the methods performed by the blockchain in the method embodiments. In addition, the units in the apparatus 600 and the foregoing other operations and/or functions are respectively used to implement corresponding procedures of the blockchain in the method embodiments.

When the apparatus 600 is configured to perform the method in FIG. 2A and FIG. 2B, the transceiver unit 610 may be configured to perform receiving and sending steps in the method, for example, steps S290, S201, and S205, and the processing unit 620 may be configured to perform a processing step in the method, for example, step S202.

When the apparatus 600 is configured to perform the method in FIG. 3, the transceiver unit 610 may be configured to perform receiving and sending steps in the method, for example, step S350, and the processing unit 620 may be configured to perform a processing step in the method.

When the apparatus 600 is configured to perform the method in FIG. 4, the transceiver unit 610 may be configured to perform receiving and sending steps in the method, for example, step S410, and the processing unit 620 may be configured to perform a processing step in the method.

It should be understood that a specific process in which the units perform the foregoing corresponding steps is described in detail in the foregoing method embodiments. For brevity, details are not described herein again.

The processing unit 620 in the foregoing embodiments may be implemented by at least one processor or processor-related circuit. The transceiver unit 610 may be implemented by a transceiver or a transceiver-related circuit. The storage unit may be implemented by at least one memory.

As shown in FIG. 7, an embodiment of this application further provides an apparatus 700. The apparatus 700 includes a processor 710, and may further include one or more memories 720. The processor 710 is coupled to the memory 720. The memory 720 is configured to store a computer program or instructions and/or data. The processor 710 is configured to execute the computer program or the instructions and/or the data stored in the memory 720, so that the methods in the foregoing method embodiments are performed. Optionally, the apparatus 700 includes one or more processors 710.

Optionally, the memory 720 and the processor 710 may be integrated together or separately disposed.

Optionally, as shown in FIG. 7, the apparatus 700 may further include a transceiver 730. The transceiver 730 is configured to receive and/or send a signal. For example, the processor 710 is configured to control the transceiver 730 to receive and/or send the signal.

In a solution, the apparatus 700 is configured to implement operations performed by the device (such as the core network device, the access network device, the terminal device, or the blockchain) in the foregoing method embodiments.

An embodiment of this application further provides a computer-readable storage medium, where the computer-readable storage medium stores computer instructions used to implement the method performed by the device (such as the core network device, the access network device, the terminal device, or the blockchain) in the foregoing method embodiments.

For example, when the computer program is executed by a computer, the computer is enabled to implement the method performed by the network device in the foregoing method embodiments.

An embodiment of this application further provides a computer program product including instructions. When the instructions are executed by a computer, the computer is enabled to implement the method performed by the device (such as the core network device, the access network device, the terminal device, or the blockchain) in the foregoing method embodiments.

An embodiment of this application further provides a communication system. The communication system includes the device (such as the core network device, the access network device, the terminal device, or the blockchain) in the foregoing embodiments.

For explanations and beneficial effects of related content of any one of the apparatuses provided above, refer to the corresponding method embodiments provided above. Details are not described herein again.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example but not of limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other suitable type of memory.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit.

All or a part of embodiments may be implemented by using software, hardware, firmware, or any combination thereof. When the software is used for implementation, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a communication system comprising at least one blockchain, wherein the method comprises:
generating, by a first communication apparatus, a first request, wherein the first request is used to request to access a first blockchain, and the first request comprises information about the first blockchain; and
sending, by the first communication apparatus, the first request to a first network element.

2. The method according to claim 1, wherein the first request further comprises at least one of the following information:
an identifier of a transaction, an identifier of a block, or an identifier of an account.

3. The method according to claim 2, wherein subscription data of the first communication apparatus comprises at least one of the following information:
information indicating a transaction set that the first communication apparatus has permission to access, information indicating a block set that the first communication apparatus has permission to access, or information indicating an account set that the first communication apparatus has permission to access; or
the method further comprises:
receiving, by the first communication apparatus, a first message, wherein the first message comprises at least one of the following information:
information indicating a transaction set accessed by the first communication apparatus, information indicating a block set accessed by the first communication apparatus, or information indicating an account set accessed by the first communication apparatus.

4. The method according to any one of claims 1 to 3, wherein the subscription data of the first communication apparatus comprises information indicating a blockchain set that the first communication apparatus has permission to access; or
the method further comprises:
receiving, by the first communications apparatus, the first message, wherein the first message comprises information indicating a blockchain set accessed by the terminal, wherein
the first blockchain belongs to the blockchain set.

5. The method according to any one of claims 1 to 3, wherein the method further comprises:
receiving, by the first communication apparatus, a first authentication message from the first network element or the first blockchain, wherein the first authentication message is used to authenticate the first communication apparatus;
sending, by the first communication apparatus, a second authentication message in response to the first authentication message to the first network element or the first blockchain; and
receiving, by the first communication apparatus, authentication indication information from the first network element or the first blockchain, wherein the authentication indication information indicates whether the first communication apparatus is successfully authenticated.

6. The method according to claim 5, wherein when the authentication indication information indicates that the first communication apparatus is successfully authenticated, the method further comprises:
sending, by the first communication apparatus, a data access request to the first blockchain, wherein the data access request is used to request to obtain first data on the first blockchain; and
receiving, by the first communication apparatus, the first data from the first blockchain; or
sending, by the first communication apparatus, a data access request to the first blockchain, wherein the data access request is used to request to send second data to the first blockchain, and the data access request comprises the second data.

7. The method according to claim 6, wherein the method further comprises:
receiving, by the first communication apparatus, a first notification message from the first network element, wherein the first notification message indicates to revoke permission for the first communication apparatus to access the first blockchain.

8. The method according to any one of claims 1 to 7, wherein the method further comprises:
receiving, by the first communication apparatus, a first configuration message from the first network element, wherein the first configuration message comprises at least one of the following information:
an identifier corresponding to a first configuration, an identifier of a blockchain corresponding to the first configuration, an identifier of the first communication apparatus, an address of the blockchain corresponding to the first configuration, a format of third data, or a type of the third data, wherein
the first configuration comprises: configuring the first communication apparatus to send the third data to the blockchain, or configuring the first communication apparatus to receive the third data sent by the blockchain.

9. The method according to claim 8, wherein the method further comprises:
receiving, by the first communication apparatus, first indication information from the first network element; or
sending, by the first communication apparatus, the first indication information to the first network element, wherein
the first indication information indicates any one of the following:
indicating to update the first configuration, indicating to cancel the first configuration, indicating to suspend the first configuration, or indicating to resume the first configuration.

10. The method according to claim 9, wherein before the receiving authentication indication information, the method further comprises:
generating, by the first communication apparatus, a first transaction based on the first configuration and the third data; and
sending, by the first communication apparatus, the first transaction, wherein the authentication indication information indicates whether the first communication apparatus is successfully authenticated; or
receiving, by the first communication apparatus, the third data from the first blockchain.

11. A communication method, applied to a communication system comprising at least one blockchain, wherein the method comprises:
receiving, by a first network element, a first request from a terminal device, wherein the first request is used to request to access a first blockchain, and the first request comprises information about the first blockchain; and
determining, by the first network element based on the first request, that the terminal device requests to access the first blockchain.

12. The method according to claim 11, wherein the method further comprises:
sending, by the first network element, a query message to a unified data management network element, wherein the query message is used to query subscription data of the terminal device and/or policy information; and
receiving, by the first network element, the subscription data of the terminal device and/or the policy information from the unified data management network element, wherein
the subscription data of the terminal device and/or the policy information comprise/comprises information indicating a blockchain set that the terminal device has permission to access.

13. The method according to claim 11 or 12, wherein the method further comprises:
sending, by the first network element, a first authentication message to the terminal device, wherein the first authentication message is used to authenticate the terminal device;
receiving, by the first network element, a second authentication message in response to the first authentication message from the terminal device; and
sending, by the first network element, authentication indication information to the terminal device, wherein the authentication indication information indicates whether the terminal device is successfully authenticated.

14. The method according to claim 13, wherein the method further comprises:
sending, by the first network element, a first notification message to the terminal device, wherein the first notification message indicates to revoke permission for the terminal device to access the first blockchain.

15. The method according to claim 13 or 14, wherein the method further comprises:
receiving, by the first network element, the first notification message from the first blockchain, wherein the first notification message indicates to revoke the permission for the terminal device to access the first blockchain; and
determining, by the first network element, that the first blockchain has permission to revoke access of the terminal device to the first blockchain.

16. The method according to any one of claims 11 to 15, wherein the method further comprises:
sending, by the first network element, a first configuration message to the terminal device, wherein the first configuration message comprises at least one of the following information:
an identifier corresponding to a first configuration, an identifier of a blockchain corresponding to the first configuration, an identifier of the terminal device, an address of the blockchain corresponding to the first configuration, a format of third data, or a type of the third data, wherein
the first configuration comprises: configuring the terminal device to send the third data to the blockchain, or configuring the terminal device to receive the third data sent by the blockchain.

17. The method according to claim 16, wherein the method further comprises:
sending, by the first network element, first indication information to the terminal device; or
receiving, by the first network element, the first indication information from the terminal device, wherein
the first indication information indicates any one of the following:
indicating to update the first configuration, indicating to suspend the first configuration, indicating to cancel the first configuration, or indicating to resume the first configuration.

18. The method according to any one of claims 11 to 17, wherein the method further comprises:
sending, by the first network element, a second configuration message to an access network device, wherein the second configuration message comprises at least one of the following information:
an identifier corresponding to a second configuration, an identifier of a blockchain corresponding to the second configuration, an identifier of the access network device, an address of the blockchain corresponding to the second configuration, a format of fourth data, or a type of the fourth data, wherein
the second configuration comprises: configuring the access network device to send the fourth data to the blockchain, or configuring the access network device to receive the fourth data sent by the blockchain.

19. The method according to claim 18, wherein the method further comprises:
sending, by the first network element, second indication information to the access network device; or
receiving, by the first network element, the second indication information from the access network device, wherein
the second indication information indicates any one of the following:
indicating to update the second configuration, indicating to suspend the second configuration, indicating to cancel the second configuration, or indicating to resume the second configuration.

20. The method according to any one of claims 11 to 19, wherein a message between the first network element and the terminal device is forwarded by a second network element, or the first network element and the second network element are a same network element; and
the second network element comprises a mobility management function network element AMF or a security anchor function network element SEAF.

21. A communication method, applied to a communication system comprising at least one blockchain, wherein the method comprises:
receiving, by a second communication apparatus, a second configuration message from a first network element, wherein the second configuration message comprises at least one of the following information:
an identifier corresponding to a second configuration, an identifier of a blockchain corresponding to the second configuration, an identifier of the second communication apparatus, an address of the blockchain corresponding to the second configuration, a format of fourth data, or a type of the fourth data, wherein
the first configuration comprises: configuring the second communication apparatus to send the fourth data to the blockchain, or configuring the second communication apparatus to receive the fourth data sent by the blockchain; and
learning of, by the second communication apparatus, the second configuration based on the second configuration message.

22. The method according to claim 21, wherein the method further comprises:
receiving, by the second communication apparatus, second indication information from the first network element; or
sending, by the second communication apparatus, the first indication information to the first network element, wherein
the second indication information indicates any one of the following:
indicating to update the second configuration, indicating to suspend the second configuration, indicating to cancel the second configuration, or indicating to resume the second configuration.

23. The method according to claim 21 or 22, wherein the method further comprises:
generating, by the second communication apparatus, a second transaction based on the second configuration and the fourth data; and
sending, by the second communication apparatus, the second transaction; or
receiving, by the second communication apparatus, the fourth data from a first blockchain.

24. A terminal device, used in a communication system comprising at least one blockchain, wherein the apparatus comprises:
a processing unit, configured to generate a first request, wherein the first request is used to request to access a first blockchain, and the first request comprises information about the first blockchain; and
a sending unit, configured to send the first request to a first network element.

25. The terminal device according to claim 24, wherein the first request further comprises at least one of the following information:
an identifier of a transaction, an identifier of a block, or an identifier of an account.

26. The terminal device according to claim 25, wherein subscription data of the terminal device comprises at least one of the following information:
information indicating a transaction set that the terminal device has permission to access, information indicating a block set that the terminal device has permission to access, or information indicating an account set that the terminal device has permission to access; or
the apparatus further comprises:
a receiving unit, configured to receive a first message, wherein the first message comprises at least one of the following information:
information indicating a transaction set accessed by the terminal device, information indicating a block set accessed by the terminal device, or information indicating an account set accessed by the terminal device.

27. The terminal device according to any one of claims 24 to 26, wherein the subscription data of the terminal device comprises information indicating a blockchain set that the terminal device has permission to access; or
the apparatus further comprises:
the receiving unit, configured to receive the first message, wherein the first message comprises information indicating a blockchain set accessed by the terminal, wherein
the first blockchain belongs to the blockchain set.

28. The terminal device according to any one of claims 24 to 27, wherein the apparatus further comprises:
the receiving unit, configured to receive a first authentication message from the first network element or the first blockchain, wherein the first authentication message is used to authenticate the terminal device, wherein
the sending unit is further configured to send a second authentication message in response to the first authentication message to the first network element or the first blockchain; and
the receiving unit is further configured to receive authentication indication information from the first network element or the first blockchain, wherein the authentication indication information indicates whether the terminal device is successfully authenticated.

29. The terminal device according to claim 28, wherein when the authentication indication information indicates that the terminal device is successfully authenticated, the sending unit is further configured to send a data access request to the first blockchain, wherein the data access request is used to request to obtain first data on the first blockchain; and
the receiving unit is further configured to receive the first data from the first blockchain; or
the sending unit is further configured to send a data access request to the first blockchain, wherein the data access request is used to request to send second data to the first blockchain, and the data access request comprises the second data.

30. The terminal device according to claim 29, wherein the receiving unit is further configured to receive a first notification message from the first network element, wherein the first notification message indicates to revoke permission for the terminal device to access the first blockchain.

31. The terminal device according to any one of claims 24 to 30, wherein the receiving unit is further configured to receive a first configuration message from the first network element, wherein the first configuration message comprises at least one of the following information:
an identifier corresponding to a first configuration, an identifier of a blockchain corresponding to the first configuration, an identifier of the terminal device, an address of the blockchain corresponding to the first configuration, a format of third data, or a type of the third data, wherein
the first configuration comprises: configuring the terminal device to send the third data to the blockchain, or configuring the terminal device to receive the third data sent by the blockchain.

32. The terminal device according to claim 31, wherein the receiving unit is further configured to receive first indication information from the first network element; or
the sending unit is further configured to send the first indication information to the first network element, wherein
the first indication information indicates any one of the following:
indicating to update the first configuration, indicating to cancel the first configuration, indicating to suspend the first configuration, or indicating to resume the first configuration.

33. The terminal device according to claim 32, wherein before the authentication indication information is received, the processing unit is further configured to generate a first transaction based on the first configuration and the third data; and
the sending unit is further configured to send the first transaction, wherein the authentication indication information indicates whether the terminal device is successfully authenticated; or
the receiving unit is further configured to receive the third data from the first blockchain.

34. A communication apparatus, applied to a communication system comprising at least one blockchain, wherein the apparatus comprises:
a receiving unit, configured to receive a first request from a terminal device, wherein the first request is used to request to access a first blockchain, and the first request comprises information about the first blockchain; and
a processing unit, configured to determine, based on the first request, that the terminal device requests to access the first blockchain.

35. The apparatus according to claim 34, wherein the apparatus further comprises:
a sending unit, configured to send a query message to a unified data management network element, wherein the query message is used to query subscription data of the terminal device and/or policy information, wherein
the receiving unit is further configured to receive the subscription data of the terminal device and/or the policy information from the unified data management network element, wherein
the subscription data of the terminal device and/or the policy information comprise/comprises information indicating a blockchain set that the terminal device has permission to access.

36. The apparatus according to claim 34 or 35, wherein the apparatus further comprises:
the sending unit, configured to send a first authentication message to the terminal device, wherein the first authentication message is used to authenticate the terminal device, wherein
the receiving unit is further configured to receive a second authentication message in response to the first authentication message from the terminal device; and
the sending unit is further configured to send authentication indication information to the terminal device, wherein the authentication indication information indicates whether the terminal device is successfully authenticated.

37. The apparatus according to claim 36, wherein the sending unit is further configured to send a first notification message to the terminal device, wherein the first notification message indicates to revoke permission for the terminal device to access the first blockchain.

38. The apparatus according to claim 36 or 37, wherein the receiving unit is further configured to receive the first notification message from the first blockchain, wherein the first notification message indicates to revoke the permission for the terminal device to access the first blockchain; and
the processing unit is further configured to determine that the first blockchain has permission to revoke access of the terminal device to the first blockchain.

39. The apparatus according to any one of claims 34 to 38, wherein the sending unit is further configured to send a first configuration message to the terminal device, wherein the first configuration message comprises at least one of the following information:
an identifier corresponding to a first configuration, an identifier of a blockchain corresponding to the first configuration, an identifier of the terminal device, an address of the blockchain corresponding to the first configuration, a format of third data, or a type of the third data, wherein
the first configuration comprises: configuring the terminal device to send the third data to the blockchain, or configuring the terminal device to receive the third data sent by the blockchain.

40. The apparatus according to claim 39, wherein the sending unit is further configured to send first indication information to the terminal device; or
the receiving unit is further configured to receive the first indication information from the terminal device, wherein
the first indication information indicates any one of the following:
indicating to update the first configuration, indicating to suspend the first configuration, indicating to cancel the first configuration, or indicating to resume the first configuration.

41. The apparatus according to any one of claims 34 to 40, wherein the sending unit is further configured to send a second configuration message to an access network device, wherein the second configuration message comprises at least one of the following information:
an identifier corresponding to a second configuration, an identifier of a blockchain corresponding to the second configuration, an identifier of the access network device, an address of the blockchain corresponding to the second configuration, a format of fourth data, or a type of the fourth data, wherein
the second configuration comprises: configuring the access network device to send the fourth data to the blockchain, or configuring the access network device to receive the fourth data sent by the blockchain.

42. The apparatus according to claim 41, wherein the sending unit is further configured to send second indication information to the access network device; or
the receiving unit is further configured to receive the second indication information from the access network device, wherein
the second indication information indicates any one of the following:
indicating to update the second configuration, indicating to suspend the second configuration, indicating to cancel the second configuration, or indicating to resume the second configuration.

43. The apparatus according to any one of claims 34 to 41, wherein a message between the communication apparatus and the terminal device is forwarded by a second network element, or the communication apparatus and the second network element are a same network element; and
the second network element comprises a mobility management function network element AMF or a security anchor function network element SEAF.

44. A computer-readable storage medium, wherein the computer-readable storage medium stores computer instructions, and when the computer instructions are run on a computer, the method according to any one of claims 1 to 23 is performed.

45. A communication system, wherein the communication system comprises the first communication apparatus configured to perform the method according to any one of claims 1 to 10, the first network element configured to perform the method according to any one of claims 11 to 20, and the second communication apparatus configured to perform the method according to any one of claims 21 to 23.
